# EUROPÄISCHE PATENTANMELDUNG

(11) **EP 4 300 188 A1**
(43) Veröffentlichungstag der Anmeldung: **03.01.2024**
(21) Anmeldenummer: 23179260.7
(22) Anmeldetag: 14.06.2023
(51) Int. Cl.: G03B 17/56, F16M 13/00, H04N 23/66, H04N 23/68

(54) **KAMERASTABILISIERUNGSVORRICHTUNG**

(30) Priorität: 27.06.2022 DE 102022115959
(71) Anmelder: Arnold & Richter Cine Technik GmbH & Co. Betriebs KG, 80807 München (DE)
(72) Erfinder: HAUBMANN, Michael, 1230 Wien (AT)
(74) Vertreter: Manitz Finsterwald Patent- und Rechtsanwaltspartnerschaft mbB

(57) **Zusammenfassung**

Eine Kamerastabilisierungsvorrichtung umfasst einen sich von einem ersten Ende zu einem zweiten Ende erstreckenden Pendelarm, welcher an dem ersten Ende eine Kamerahaltevorrichtung zum Halten einer zugeordneten Kamera und an dem zweiten Ende eine Funktionselementhaltevorrichtung zum Halten eines zugeordneten Funktionselements aufweist. Die Kamerastabilisierungsvorrichtung umfasst ferner eine Signalkonzentrationseinrichtung, die dazu ausgebildet ist, über eine gemeinsame Übertragungsstrecke wenigstens zwei verschiedenartige Betriebssignale zwischen dem ersten Ende des Pendelarms und dem zweiten Ende des Pendelarms zu übertragen.

## Beschreibung

Die Erfindung betrifft eine Kamerastabilisierungsvorrichtung, welche einen sich von einem ersten Ende zu einem zweiten Ende erstreckenden Pendelarm umfasst, der an dem ersten Ende eine Kamerahaltevorrichtung zum Halten einer zugeordneten Kamera und an dem zweiten Ende eine Funktionselementhaltevorrichtung zum Halten eines zugeordneten Funktionselements aufweist.

Derartige Kamerastabilisierungsvorrichtungen können insbesondere bei einer Aufnahme von Bewegtbildsequenzen, beispielsweise einer Szene eines Kinofilms, zum Einsatz kommen, um eine Stabilisierung der für die Aufnahme vorgesehenen zugeordneten Kamera zu erreichen, wenn die Kamera während der Aufnahme in verschiedene Positionen bewegt wird. Dazu kann die Kamerastabilisierungsvorrichtung beispielsweise an einem Körper eines Kameramanns oder einem automatisch und/oder gesteuert bewegbaren Körper befestigbar sein, so dass die Kamera gemeinsam mit dem Körper bewegt, während der Bewegung jedoch stabilisiert werden kann.

Durch die Anordnung der zugeordneten Kamera an einem ersten Ende eines Pendelarms einer solchen Kamerastabilisierungsvorrichtung kann die Kamera ferner auch relativ zu einem Körper, an welchem die Kamerastabilisierungsvorrichtung befestigt ist, bewegt und ausgerichtet werden. Hierfür kann die Kamerastabilisierungsvorrichtung über einen Haltearm mit einem Gelenk, beispielsweise an einem mittleren Abschnitt des Pendelarms, an dem Körper befestigbar sein. Das Funktionselement an dem zweiten Ende des Pendelarms kann ein Gegengewicht zu der zugeordneten Kamera bilden, so dass der Schwerpunkt der Kamerastabilisierungsvorrichtung zumindest annähernd in die Mitte des Pendelarms verlegt werden kann, um die Kamera einerseits stabil in einer vorbestimmten Position halten zu können, die Position der Kamera andererseits jedoch durch geringfügige auf den Pendelarm aufgebrachte Kräfte bewusst verändern zu können.

Ferner kann es bei einer solchen Kamerastabilisierungsvorrichtung vorgesehen sein, Betriebssignale von dem ersten Ende an das zweite Ende des Pendelarms zu übertragen, um beispielsweise von der Kamera generierte Bilddaten und/oder Informationen über aktuelle Kameraeinstellungen an das Funktionselement übermitteln zu können. Das Übertragen derartiger Betriebssignale erfordert es jedoch, Kabelverbindungen zwischen dem ersten Ende und dem zweiten Ende des Pendelarms bereitzustellen, wobei insbesondere zum Übertragen mehrerer verschiedenartiger Betriebssignale eine entsprechende Anzahl von Kabelverbindungen erforderlich ist. Solche Kabelverbindungen führen jedoch zu einer Erhöhung des Gewichts der Kamerastabilisierungsvorrichtung, so dass sich insbesondere das manuelle Tragen der Kamerastabilisierungsvorrichtung während längerer Aufnahmen unangenehm gestalten kann. Zudem können die Kabelverbindungen die Gewichtsverteilung der Kamerastabilisierungsvorrichtung und insbesondere des Pendelarms beeinflussen, wodurch sich der Schwerpunkt der Kamerastabilisierungsvorrichtung verschieben und eine exakte Positionierung der Kamera im Raum erschwert werden kann. Gegebenenfalls kann daher ein manuelles und/oder externes Fixieren des Pendelarms erforderlich sein, um die Kamera in einer bestimmten Position halten zu können.

Es ist daher eine Aufgabe der Erfindung, eine Kamerastabilisierungsvorrichtung zu schaffen, welche die Übertragung verschiedenartiger Betriebssignale zwischen dem ersten Ende des Pendelarms und dem zweiten Ende des Pendelarms bei einem möglichst geringen Gewicht und einer möglichst geringen Beeinflussung der Gewichtsverteilung der Kamerastabilisierungsvorrichtung ermöglicht.

Diese Aufgabe wird gelöst durch eine Kamerastabilisierungsvorrichtung mit den Merkmalen des Anspruchs 1.

Die Kamerastabilisierungsvorrichtung umfasst eine Signalkonzentrationseinrichtung, die dazu ausgebildet ist, über eine gemeinsame Übertragungsstrecke wenigstens zwei verschiedenartige Betriebssignale zwischen dem ersten Ende des Pendelarms und dem zweiten Ende des Pendelarms zu übertragen.

Die Signalkonzentrationseinrichtung ermöglicht es somit, die wenigstens zwei verschiedenartigen Betriebssignale zu konzentrieren und strukturiert über die gemeinsame Übertragungsstrecke zu übermitteln, um die Betriebssignale zwischen dem ersten Ende des Pendelarms und dem zweiten Ende des Pendelarms zu übertragen. Indem verschiedenartige Betriebssignale über die gemeinsame Übertragungsstrecke übermittelt werden können, müssen die verschiedenartigen Betriebssignale - anders als bei herkömmlichen Kamerastabilisierungsvorrichtungen - dazu nicht über jeweilige eigene Übertragungsstrecken und beispielsweise jeweilige Kabel an das entgegengesetzte Ende des Pendelarms geleitet werden, sondern die Übermittlung wenigstens zweier verschiedenartiger Betriebssignale kann über die gemeinsame, insbesondere über eine einzige, Übertragungsstrecke erfolgen. Diese Übermittlung ermöglicht es daher, die Anzahl der zum Übermitteln der wenigstens zwei verschiedenartigen Betriebssignale benötigten Übertragungsstrecken zu reduzieren, so dass das Gewicht der Kamerastabilisierungsvorrichtung insgesamt verringert und eine verbesserte Gewichtsverteilung erreicht werden kann.

Insbesondere können die verschiedenartigen Betriebssignale von verschiedenen Einrichtungen generiert und/oder ausgegeben sein, wobei diese Einrichtungen beispielsweise von der zugeordneten Kamera und/oder der Kamerahaltevorrichtung umfasst und/oder mit der zugeordneten Kamera und/oder der Kamerahaltevorrichtung verbunden sein können. Die Signalkonzentrationseinrichtung kann dazu ausgebildet sein, an dem ersten Ende und/oder dem zweiten Ende des Pendelarms die verschiedenartigen Betriebssignale von unterschiedlichen Einrichtungen zu empfangen und/oder an unterschiedliche Einrichtungen auszugeben.

Die Signalkonzentrationseinrichtung kann einen ersten Teil an dem ersten Ende des Pendelarms und einen zweiten Teil an dem zweiten Ende des Pendelarms aufweisen, wobei zwischen dem ersten Teil und dem zweiten Teil die Übertragungsstrecke verläuft.

Die Signalkonzentrationseinrichtung kann beispielsweise einen Sender (an einem Ende oder an beiden Enden des Pendelarms) und einen Empfänger (an dem anderen Ende oder an beiden Enden des Pendelarms) umfassen, und/oder einen Konzentrator (an einem Ende oder an beiden Enden des Pendelarms) und einen Extrahierer (an dem anderen Ende oder an beiden Enden des Pendelarms), wie nachstehend noch erläutert wird.

Beispielsweise können die verschiedenartigen Betriebssignale ein Bildsignal umfassen, mittels dessen von der zugeordneten Kamera und/oder einem Bildsensor der zugeordneten Kamera generierte Bilddaten übertragen werden können. Bei manchen Kameras werden bereits in der Kamera aufgrund der von dem Bildsensor generierten Bilddaten unterschiedliche Bildsignale erzeugt, nämlich zum einen in einem Format zur Darstellung an einem Bildschirm (der insbesondere als ein Funktionselement an dem zweiten Ende des Pendelarms angeordnet sein kann) und zum anderen in einem Format zur Weiterübertragung an einen externen Funkempfänger (insbesondere über einen an dem zweiten Ende des Pendelarms angeordneten Funksender als Funktionselement). Bei derartigen Ausführungsformen besitzen die beiden Bildsignale ein unterschiedliches Format und/oder einen unterschiedlichen Inhalt und bilden somit zwei verschiedenartige Betriebssignale. Eine andere Art eines Betriebssignals kann beispielsweise ein Bildsignal sein, das in einem Format zur Übermittlung an die zugeordnete Kamera von dem zweiten Ende (beispielsweise von einem dort angeordneten Funkempfänger) an das erste Ende des Pendelarms übermittelt wird (beispielsweise um zu Kontrollzwecken an einem integrierten Bildschirm der zugeordneten Kamera angezeigt zu werden).

Die verschiedenartigen Betriebssignale können auch ein Audiosignal umfassen, das von einem zugeordneten Mikrofon (beispielsweise an oder in der Kamera angeordnet und/oder mit der Kamera verbunden) generiert wird und über die gemeinsame Übertragungsstrecke an das zweite Ende des Pendelarms übermittelt wird.

Die verschiedenartigen Betriebssignale können beispielsweise auch ein Stromversorgungssignal zur Versorgung der zugeordneten Kamera und/oder der Kamerahaltevorrichtung und/oder des zugeordneten Funktionselements mit elektrischer Energie umfassen. Ein derartiges Stromversorgungssignal kann insbesondere von einer an dem zweiten Ende des Pendelarms angeordneten elektrischen Energiequelle als Funktionselement generiert werden, wobei ein Stromversorgungskabel als Übertragungsstrecke dienen kann.

Die verschiedenartigen Betriebssignale können beispielsweise auch ein Positionssensorsignal umfassen, das von einem von der Kamera umfassten oder mit der Kamera verbundenen Positionssensor bzw. einer entsprechende Messeinrichtung generiert wird und eine Position und/oder Ausrichtung der Kamera im Raum, beispielsweise in einem Bildaufnahmestudio, repräsentiert. Ein solcher Positionssensor kann jedoch auch unmittelbar an der Kamerahaltevorrichtung vorgesehen sein und die Positionssensorsignale können die Position der Kamerahaltevorrichtung und/oder der Kamera repräsentieren, so dass die wenigstens zwei verschiedenartigen Betriebssignale beispielsweise von einem Bildsensor der Kamera generierte Bildsignale und von einem an der Kamerahaltevorrichtung und/oder der Kamera angeordneten Positionssensor generierte Positionssensorsignale umfassen können. Insbesondere können solche Positionssensorsignale auch Ausrichtungen der Kamerahaltevorrichtung, die beispielsweise gegenüber dem Pendelarm verkippbar und/oder drehbar sein kann, umfassen.

Darüber hinaus kann an der Kamera und/oder der Kamerahaltevorrichtung beispielsweise ein Inertialsensor vorgesehen sein, um Beschleunigungen der Kamera ermitteln zu können, und die wenigstens zwei Betriebssignale können ein von einem solchen Inertialsensor generiertes Inertialsensorsignal umfassen, wobei solche Inertialsensorsignale insbesondere ein von einem Betriebssignal zum Übermitteln von Bilddaten und/oder einem Betriebssignal zum Übermitteln von Positionssensordaten verschiedenartiges Betriebssignal darstellen und von der Signalkonzentrationseinrichtung über die gemeinsame Übertragungsstrecke übermittelt werden können.

Ferner kommt als weiteres zu übermittelndes Betriebssignal beispielsweise ein Kamerazustandssignal in Betracht, das angeben kann, ob die Kamera eingeschaltet ist und/oder eine Aufnahme gestartet wurde. Das Kamerazustandssignal kann es beispielsweise ermöglichen, an einem an dem zweiten Ende des Pendelarms angeordneten Bildschirm anzuzeigen, ob momentan eine Aufnahme mittels der Kamera erfolgt, ob sich die Kamera in einem Inaktivitätszustand befindet und eingeschaltet ist, ohne dass jedoch eine Aufnahme erfolgt, oder ob die Kamera ausgeschaltet ist. Insbesondere kann an dem Bildschirm dazu ein auch an der Kamera wiedergegebenes Rotlicht (Tally) angezeigt werden, über welches beispielsweise einem Schauspieler oder Moderator mitgeteilt werden kann, dass eine Aufnahme läuft.

Zudem kann es vorgesehen sein, mittels eines jeweiligen Betriebssignals einen Einstellwert eines Parameters eines Objektivs der zugeordneten Kamera an die Signalkonzentrationseinrichtung und mittels der Signalkonzentrationseinrichtung über die gemeinsame Übertragungsstrecke an das jeweilige andere Ende des Pendelarms zu übermitteln. Ein derartiges Objektiveinstellsignal repräsentiert also einen Einstellwert eines Parameters eines Objektivs der zugeordneten Kamera. Beispielweise kann ein Fokuswert eines Objektivs, eine Brennweite des Objektivs und/oder eine Blendenöffnung des Objektivs über die gemeinsame Übertragungsstrecke übermittelt werden. Solche Werte können insbesondere an einem an dem zweiten Ende des Pendelarms als Funktionselement angeordneten Bildschirm wiedergegeben werden, so dass ein Kameramann die Einstellungen des Objektivs überprüfen und gegebenenfalls eine Anpassung veranlassen kann. Derartige Informationen hinsichtlich der Einstellung eines Objektivs der Kamera können insbesondere zusätzlich zu Bilddaten der Kamera als Metadaten mittels der Signalkonzentrationseinrichtung über die gemeinsame Übertragungsstrecke übermittelt werden.

Die Signalkonzentrationseinrichtung kann insbesondere auch dazu ausgebildet sein, ein Steuersignal für die Kamera (einschließlich eines Objektivs der zugeordneten Kamera) und/oder ein Steuersignal für die Kamerahaltevorrichtung (z.B. für einen Elektromotor der Kamerahaltevorrichtung) über die gemeinsame Übertragungsstrecke zu übermitteln. Beispielsweise kann die Signalkonzentrationseinrichtung dazu ausgebildet sein, ein jeweiliges Steuersignal für verschiedene Objektiv-Stellmotoren zum Verstellen von Objektivringen eines mit der Kamera verbundenen Objektivs über die gemeinsame Übertragungsstrecke an das erste Ende des Pendelarms zu übermitteln. Ein Steuersignal für die Kamera kann beispielswese mittels eines an dem zweiten Ende des Pendelarms gehaltenen Funktionselements erzeugbar oder an einem solchen Funktionselement empfangbar sein. Hierfür kann das Steuersignal von dem Funktionselement zunächst an einen dem zweiten Ende des Pendelarms zugeordneten Teil der Signalkonzentrationseinrichtung und von diesem über die gemeinsame Übertragungsstrecke an einen dem ersten Ende des Pendelarms zugeordneten Teil der Signalkonzentrationseinrichtung übermittelt werden; von dort wird das Steuersignal schließlich an den Objektiv-Stellmotor übermittelt. Allgemein kann es sich bei dem jeweiligen Steuersignal insbesondere um einen Steuerbefehl zum Einstellen von Parametern eines Objektivs der zugeordneten Kamera und/oder einen Steuerbefehl zum Ein- oder Ausschalten der Kamera und/oder einen Steuerbefehl zum Starten oder Stoppen einer Aufnahme handeln.

Die Signalkonzentrationseinrichtung kann ferner dazu ausgebildet sein, mehr als zwei Betriebssignale der vorgenannten verschiedenen Arten über die gemeinsame Übertragungsstrecke zu übertragen, insbesondere drei oder vier verschiedenartige Betriebssignale. Insbesondere ist im Rahmen der Erfindung vorgesehen, dass über die gemeinsame Übertragungsstrecke entlang des Pendelarms mehr verschiedenartige Betriebssignale übertragen werden als dies allein durch die Verwendung genormter Komponenten herkömmlich der Fall ist.

Grundsätzlich kann es somit vorgesehen sein, dass wenigstens zwei verschiedenartige Betriebssignale von dem einen Ende des Pendelarms (erstes oder zweites Ende) über die gemeinsame Übertragungsstrecke an das andere Ende des Pendelarms (zweites bzw. erstes Ende) übermittelbar sind, beispielsweise ein Bildsignal und ein Positionssignal. Es kann jedoch auch vorgesehen sein, dass die Signalkonzentrationseinrichtung dazu ausgebildet ist, eine erste Art der wenigstens zwei verschiedenartigen Betriebssignale in einer ersten Richtung und eine zweite Art der wenigstens zwei verschiedenartigen Betriebssignale in einer der ersten Richtung entgegengesetzten zweiten Richtung über die gemeinsame Übertragungsstrecke zu übermitteln. Hierzu kann die Signalkonzentrationseinrichtung beispielsweise dazu ausgebildet sein, über die gemeinsame Übertragungsstrecke ein Bildsignal von dem ersten an das zweite Ende des Pendelarms zu übermitteln und wenigstens ein Steuersignal für die Kamera von dem zweiten an das erste Ende des Pendelarms zu übermitteln. Mit anderen Worten kann die Übertragung der wenigstens zwei verschiedenartigen Betriebssignale über die gemeinsame Übertragungsstrecke in derselben Richtung oder in zueinander entgegengesetzten Richtungen erfolgen.

Im Zusammenhang mit der Erfindung sind Betriebssignale, die zwar aufeinanderfolgend generierte und sich daher voneinander unterscheidende, jedoch gleichartige Daten übertragen, nicht als verschiedenartige Bildsignale zu verstehen. Beispielsweise ist die Signalkonzentrationseinrichtung somit nicht etwa lediglich dazu ausgebildet, aufeinanderfolgend von der Kamera generierte Bilddaten, also zeitlich aufeinanderfolgend aufgenommene Abbildungen repräsentierende Daten, die durch gleichartige Betriebssignale von der Kamera an die Signalkonzentrationseinrichtung übergeben werden, über eine gemeinsame Übertragungsstrecke an das zweite Ende des Pendelarms zu übermitteln, sondern es können wenigstens zwei verschiedenartige Betriebssignale über die gemeinsame Übertragungsstrecke übermittelt werden. Beispielsweise können dazu an verschiedenen Stellen der Kamera und/oder der Kamerahaltevorrichtung generierte Betriebssignale mittels der Signalkonzentrationseinrichtung gebündelt und über die gemeinsame Übertragungsstrecke übermittelt werden. Dadurch ist es nicht erforderlich, dass zwischen jeder dieser Stellen, an welchen die Betriebssignale von der Kamera und/oder der Kamerahaltevorrichtung ausgeben werden, und dem zweiten Ende des Pendelarms eine jeweilige (separate) Übertragungsstrecke und insbesondere eine jeweilige Kabelverbindung besteht.

Die im Zusammenhang mit der Erfindung genannten verschiedenartigen Betriebssignale können bei einigen Ausführungsformen insbesondere im Wesentlichen gleichzeitig generiert werden.

Ferner können die verschiedenartigen Betriebssignale insbesondere im Wesentlichen gleichzeitig an die Signalkonzentrationseinrichtung übergeben werden, wobei die Signalkonzentrationseinrichtung dazu ausgebildet sein kann, die gleichzeitig empfangenen verschiedenartigen Betriebssignale gleichzeitig oder zeitversetzt über die gemeinsame Übertragungsstrecke zu übertragen. Die Signalkonzentrationseinrichtung kann daher dazu ausgebildet sein, wenigstens zwei verschiedenartige Betriebssignale gleichzeitig oder im Wesentlichen gleichzeitig zu empfangen und für eine (aufeinander folgende) Übermittlung über die gemeinsame Übertragungsstrecke zu strukturieren, um zunächst ein erstes der wenigstens zwei verschiedenartigen Betriebssignale und daraufhin ein zweites der wenigstens zwei Betriebssignale über die gemeinsame Übertragungsstrecke zu übermitteln. Grundsätzlich können die wenigstens zwei verschiedenartigen Betriebssignale jedoch auch zeitversetzt an der Signalkonzentrationseinrichtung empfangen werden, indem beispielsweise ein Positionssensor und ein Bildsensor der Kamera zeitversetzt und/oder mit einer unterschiedlichen Frequenz Betriebssignale generieren. Die Signalkonzentrationseinrichtung kann daher auch dazu ausgebildet sein, solche zeitversetzt empfangenen Betriebssignale über die gemeinsame Übertragungsstrecke zu übermitteln.

Wie bereits erläutert, ist die Funktionselementhaltevorrichtung dazu vorgesehen, ein Funktionselement aufzunehmen, welches einerseits ein Gegengewicht zu der Kamera bilden kann, andererseits jedoch auch dazu dienen kann, eine Aufnahme mittels der zugeordneten Kamera zu unterstützen. Die Funktionselementhaltevorrichtung kann insbesondere eine mechanische Schnittstelle (z.B. für eine Schraubverbindung oder Klemmverbindung) und/oder eine elektrische Schnittstelle (z.B. elektrische Kontakte) umfassen. Beispielsweise kann es sich bei dem Funktionselement um eine Batterie oder einen Akkumulator handeln, welche bzw. welcher elektrische Energie für die Kamera und/oder die Kamerahaltevorrichtung bereitstellt. Ferner kann als Funktionselement beispielsweise ein Bildschirm (Monitor) vorgesehen sein, an welchem etwa von der zugeordneten Kamera generierte und mittels der Signalkonzentrationseinrichtung als Betriebssignal übermittelte Bilddaten dargestellt werden können. Dadurch kann beispielsweise ein Kameramann einen von der an dem ersten Ende des Pendelarms angeordneten Kamera aufgenommenen Bildausschnitt an dem Bildschirm beobachten und überprüfen, um gegebenenfalls eine Position der Kamera und dadurch den aufgenommenen Bildausschnitt anpassen zu können, obwohl der Kameramann nicht durch einen direkt an der Kamera angeordneten Sucher hindurchblicken kann. Das Funktionselement kann dazu derart mit der Signalkonzentrationseinrichtung verbunden sein, dass das an dem zweiten Ende des Pendelarms empfangene Betriebssignal (Bilddaten) an dem dort befindlichen Funktionselement (Bildschirm) weiterverarbeitet und/oder dargestellt werden kann.

Auch weitere Daten, die in Form der verschiedenartigen Betriebssignale an die Signalkonzentrationseinrichtung übermittelt werden, können beispielsweise an einem als Bildschirm ausgebildeten Funktionselement dargestellt werden, um möglichst umfangreiche Informationen hinsichtlich der Aufnahme bereitstellen zu können. Beispielsweise können eine Position der Kamera im Raum, eine Information darüber, ob die Kamera sich in einem Aufnahmezustand befindet, Einstelllungen eines Objektivs der Kamera, beispielsweise ein Fokuswert, eine Blendenöffnung und/oder eine Brennweite, und/oder Signale einer Inertialsensorik mittels der Signalkonzentrationseinrichtung über die gemeinsame Übertragungsstrecke an das Funktionselement übertragen werden. An einem Bildschirm kann daher beispielsweise zusätzlich zu den aufgenommenen Bilddaten ein an der Kamera wiedergegebenes Rotlicht (Tally) dargestellt werden, welches signalisiert, dass mit der Kamera eine Aufnahme durchgeführt wird.

Darüber hinaus kann das Funktionselement beispielsweise eine Eingabeeinrichtung zum Einstellen von Steuerbefehlen für die zugeordnete Kamera umfassen, welche sodann als Steuersignal von der Signalkonzentrationseinrichtung über die gemeinsame Übertragungsstrecke und die Kamerahaltevorrichtung an die Kamera übermittelt werden können. Beispielsweise kann das Funktionselement dazu eine oder mehrere Tasten oder einen berührungsempfindlichen Bildschirm (Touchscreen) umfassen.

Wie sich aus den vorstehenden und den weiteren Erläuterungen ergibt, sind die Begriffe "Daten", "Signalkonzentrationseinrichtung", "Übertragungsstrecke" und "Signal" im Zusammenhang mit der vorliegenden Erfindung als generalisierte Bezeichnungen zu verstehen. Insbesondere können die genannten "Daten" und "Signale" jegliche Art von Informationen (als einzelne Werte, Pakete oder Daten-/Signalstrom) und elektrischen Versorgungen (z.B. der Kamerastabilisierungsvorrichtung) umfassen. Ein "Betriebssignal" kann somit auch mehrere gleichartige Daten (z.B. als Paket oder Daten-/Signalstrom) umfassen; beispielsweise kann ein jeweiliges "Bildsignal" die Bildinformation einer gesamten von der zugeordneten Kamera generierten Abbildung umfassen. Die genannte "Übertragungsstrecke" kann auch als "Signalleitung" bezeichnet werden und kann insbesondere einen (drahtgebundenen) elektrischen oder einen (drahtlosen) elektromagnetischen oder optischen Übertragungspfad umfassen, der also nicht zwangsläufig eine Kabelverbindung umfassen muss.

Weitere Ausführungsformen sind den abhängigen Ansprüchen, der Beschreibung sowie den Zeichnungen zu entnehmen.

Die wenigstens zwei verschiedenartigen Betriebssignale können wenigstens zwei (insbesondere zwei, drei oder vier) der folgenden Betriebssignale umfassen:
(a) ein Stromversorgungssignal zur Versorgung der zugeordneten Kamera und/oder der Kamerahaltevorrichtung und/oder des zugeordneten Funktionselements mit elektrischer Energie, insbesondere von dem zweiten Ende an das erste Ende des Pendelarms;
(b) ein Bildsignal der zugeordneten Kamera in einem Format zur Darstellung an einem Bildschirm, insbesondere von dem ersten Ende an das zweite Ende des Pendelarms;
(c) ein Bildsignal der zugeordneten Kamera in einem Format zur Weiterübertragung an einen externen Funkempfänger, insbesondere von dem ersten Ende an das zweite Ende des Pendelarms;
(d) ein Bildsignal in einem Format zur Übermittlung an die zugeordnete Kamera, insbesondere von dem zweiten Ende an das erste Ende des Pendelarms;
(e) ein Audiosignal eines zugeordneten Mikrofons, insbesondere von dem ersten Ende an das zweite Ende des Pendelarms;
(f) ein Positionssensorsignal eines Positionssensors, insbesondere von dem ersten Ende an das zweite Ende des Pendelarms;
(g) ein Kamerazustandssignal, das einen Aufnahmezustand, einen Inaktivitätszustand und/oder einen ausgeschalteten Zustand der zugeordneten Kamera repräsentiert, insbesondere von dem ersten Ende an das zweite Ende des Pendelarms;
(h) ein Inertialsensorsignal eines Inertialsensors, insbesondere von dem ersten Ende an das zweite Ende des Pendelarms;
(i) ein Objektiveinstellsignal, das einen Einstellwert eines Parameters eines Objektivs der zugeordneten Kamera repräsentiert, insbesondere von dem ersten Ende an das zweite Ende des Pendelarms;
(j) ein Steuersignal zum Steuern der zugeordneten Kamera einschließlich eines Objektivs der zugeordneten Kamera, insbesondere von dem zweiten Ende an das erste Ende des Pendelarms; und/oder
(k) ein Steuersignal zum Steuern der Kamerahaltevorrichtung, insbesondere von dem zweiten Ende an das erste Ende des Pendelarms.

Gemäß verschiedenen Ausführungsformen ist es von Vorteil, wenn die Signalkonzentrationseinrichtung dazu ausgebildet ist, über die gemeinsame Übertragungsstrecke wenigstens die zwei folgenden verschiedenartigen Betriebssignale zwischen dem ersten Ende und dem zweiten Ende des Pendelarms zu übertragen:
- ein Stromversorgungssignal (a) und ein Bildsignal (b) oder (c) oder (d); oder
- ein Stromversorgungssignal (a) und ein Audiosignal (e); oder
- ein Stromversorgungssignal (a) und ein Sensorsignal (f) oder (h); oder
- ein Stromversorgungssignal (a) und ein Kamerazustandssignal (g); oder
- ein Stromversorgungssignal (a) und ein Objektiveinstellsignal (i); oder
- ein Stromversorgungssignal (a) und ein Steuersignal (j) oder (k); oder
- ein Bildsignal (b) und ein Bildsignal (c); oder
- ein Bildsignal (b) oder (c) und ein Bildsignal (d); oder
- ein Bildsignal (b) oder (c) oder (d) und ein Audiosignal (e); oder
- ein Bildsignal (b) oder (c) oder (d) und ein Sensorsignal (f) oder (h); oder
- ein Bildsignal (b) oder (c) oder (d) und ein Kamerazustandssignal (g); oder
- ein Bildsignal (b) oder (c) oder (d) und ein Objektiveinstellsignal (i); oder
- ein Bildsignal (b) oder (c) oder (d) und ein Steuersignal (j) oder (k); oder
- ein Audiosignal (e) und ein Sensorsignal (f) oder (h); oder
- ein Audiosignal (e) und ein Kamerazustandssignal (g); oder
- ein Audiosignal (e) und ein Objektiveinstellsignal (i); oder
- ein Audiosignal (e) und ein Steuersignal (j) oder (k); oder
- ein Sensorsignal (f) oder (h) und ein Kamerazustandssignal (g); oder
- ein Sensorsignal (f) oder (h) und ein Objektiveinstellsignal (i); oder
- ein Sensorsignal (f) oder (h) und ein Steuersignal (j) oder (k); oder
- ein Kamerazustandssignal (g) und ein Objektiveinstellsignal (i); oder
- ein Kamerazustandssignal (g) und ein Steuersignal (j) oder (k); oder
- ein Objektiveinstellsignal (i) und ein Steuersignal (j) oder (k); oder
- ein Steuersignal (j) und ein Steuersignal (k).

Die Signalkonzentrationseinrichtung kann insbesondere einen oder mehrere Signaleingänge aufweisen, um das jeweilige Betriebssignal zu empfangen. Ferner kann die Signalkonzentrationseinrichtung einen oder mehrere Signalausgänge aufweisen, um ein das jeweilige Betriebssignal auszugeben bzw. weiterzuleiten.

Die gemeinsame Übertragungsstrecke kann bei einigen Ausführungsformen durch einen Innenraum des Pendelarms verlaufen. Insbesondere bei Ausführungsformen, bei welchen die Übertragungsstrecke ein Kabel umfasst, kann ein solches Kabel somit im Innenraum des Pendelarms verlaufen, so dass der Pendelarm auch als ein Kabelschacht zur Führung des Kabels genutzt werden kann. Außen an dem Pendelarm verlaufende Kabel, welche eine Bewegung eines Kameramanns mit der Kamerastabilisierungsvorrichtung beeinträchtigen könnten, können dadurch vermieden werden. Auch die Signalkonzentrationseinrichtung oder Teile hiervon können in dem Innenraum des Pendelarms angeordnet sein.

Bei einigen Ausführungsform kann die Signalkonzentrationseinrichtung dazu ausgebildet sein, die wenigstens zwei verschiedenartigen Betriebssignale optisch, elektrisch oder elektromagnetisch zu übertragen. Dazu kann die gemeinsame Übertragungsstrecke zwischen einem ersten Teil der Signalkonzentrationseinrichtung an dem ersten Ende des Pendelarms und einem zweiten Teil der Signalkonzentrationseinrichtung an dem zweiten Ende des Pendelarms beispielsweise durch eine faseroptische Verbindung , insbesondere ein Glasfaserkabel, ein elektrisches Kabel, insbesondere ein Koaxialkabel, eine freie Sichtverbindung zum Übertragen optischer Signale oder eine Funkverbindung gebildet sein, wie nachstehend noch näher erläutert ist.

Die Signalkonzentrationseinrichtung kann bei einigen Ausführungsformen dazu ausgebildet sein, die wenigstens zwei verschiedenen Betriebssignale drahtlos zu übermitteln. Ferner kann die Signalkonzentrationseinrichtung bei einigen Ausführungsformen dazu ausgebildet sein, die wenigstens zwei verschiedenartigen Betriebssignale drahtgebunden (d.h. leitungsgebunden) zu übermitteln. Wie bereits erläutert, kann zur drahtlosen Übermittlung beispielsweise eine Sichtverbindung oder eine Funkverbindung vorgesehen sein, während eine drahtgebundene Übermittlung beispielsweise über eine faseroptische Verbindung, insbesondere ein Glasfaserkabel, oder ein elektrisches Kabel, insbesondere ein Koaxialkabel, erfolgen kann.

Bei einigen Ausführungsformen kann die Signalkonzentrationseinrichtung dazu ausgebildet sein, über die gemeinsame Übertragungsstrecke eines der wenigstens zwei verschiedenartigen Betriebssignale von dem ersten Ende an das zweite Ende des Pendelarms und ein anderes der wenigstens zwei verschiedenartigen Betriebssignale von dem zweiten Ende an das erste Ende des Pendelarms zu übertragen. Mit anderen Worten kann die Übertragung der wenigstens zwei verschiedenartigen Betriebssignale, insbesondere in einer der vorstehend genannten Kombinationen, in zueinander entgegengesetzten Richtungen erfolgen.

Bei derartigen Ausführungsformen kann die Signalkonzentrationseinrichtung an dem ersten Ende des Pendelarms einen ersten Signalsender und einen ersten Signalempfänger sowie an dem zweiten Ende des Pendelarms einen dem ersten Signalempfänger zugeordneten zweiten Signalsender und einen dem ersten Signalsender zugeordneten zweiten Signalempfänger aufweisen (z.B. elektrische, optoelekronische oder Funk-Sender und Empfänger).

Bei einigen Ausführungsformen kann die Signalkonzentrationseinrichtung dazu ausgebildet sein, die wenigstens zwei verschiedenartigen Betriebssignale über die gemeinsame Übertragungsstrecke von dem einen an das andere der zwei Enden des Pendelarms zu übertragen. Mit anderen Worten kann die Übertragung der wenigstens zwei verschiedenartigen Betriebssignale, insbesondere in einer der vorstehend genannten Kombinationen, in derselben Richtung erfolgen.

Bei einigen Ausführungsformen kann die Signalkonzentrationseinrichtung an dem einen der zwei Enden des Pendelarms einen Signalkonzentrator und an dem anderen der zwei Enden des Pendelarms einen Signalextrahierer aufweisen. Der Signalkonzentrator kann dazu ausgebildet sein, die wenigstens zwei verschiedenartigen Betriebssignale zu konzentrieren und strukturiert über die gemeinsame Übertragungsstrecke zu übermitteln. Der Signalextrahierer kann dazu ausgebildet sein, die über die gemeinsame Übertragungsstrecke übermittelten Betriebssignale in komplementärer Weise in Einzelsignale zurückzuführen. Der Signalkonzentrator kann beispielsweise einen Multiplexer aufweisen, und der Signalextrahierer kann beispielsweise einen Demultiplexer aufweisen. Insbesondere kann der Signalkonzentrator bei solchen Ausführungsformen dazu ausgebildet sein, die wenigstens zwei verschiedenartigen Betriebssignale parallel an jeweiligen Signaleingängen zu empfangen und seriell über die gemeinsame Übertragungsstrecke zu übermitteln. Beispielsweise kann der Signalkonzentrator dazu an einem ersten Signaleingang ein von der Kamera generiertes Bildsignal und an einem zweiten Signaleingang ein von einem Positionssensor generiertes Positionssensorsignal empfangen, um beispielsweise zunächst das Bildsignal und daraufhin das Positionssensorsignal über die gemeinsame Übertragungsstrecke an den Signalextrahierer zu übermitteln. Die gemeinsame Übertragungsstrecke kann dazu beispielsweise ein elektrisches Kabel umfassen, welches den Signalkonzentrator mit dem Signalextrahierer verbindet, wobei über dieses eine elektrische Kabel zunächst das Bildsignal und sodann das Positionssignal übertragen werden. Daraufhin kann beispielsweise wiederum ein Bildsignal, welches eine nachfolgend von der Kamera generierte Abbildung repräsentiert, und sodann ein aktualisiertes Positionssensorsignal über die gemeinsame Übertragungsstrecke übertragen werden, und so fort.

Der Signalextrahierer kann hingegen insbesondere einen Signaleingang aufweisen, um die über die gemeinsame Übertragungsstrecke übermittelten verschiedenartigen Betriebssignale zu empfangen, wobei der Signalextrahierer dazu ausgebildet sein kann, die jeweiligen verschiedenartigen Betriebssignale zu extrahieren und als parallele Signale weiterzuleiten, beispielsweise an das Funktionselement an dem zweiten Ende des Pendelarms. Dementsprechend kann der Signalextrahierer einen jeweiligen Signalausgang zum Ausgeben der verschiedenartigen Betriebssignale aufweisen.

Ein Multiplexen und Demultiplexen der verschiedenartigen Betriebssignale ermöglicht es somit, die wenigstens zwei verschiedenartigen Betriebssignale über die gemeinsame Übertragungsstrecke zu übertragen, woraufhin die verschiedenartigen Betriebssignale nach dem Empfangen wieder extrahiert und gesondert weiterverarbeitet und/oder an dem Funktionselement ausgelesen werden können. Obgleich die verschiedenartigen Betriebssignale somit letztlich einzeln an dem jeweiligen Ende des Pendelarms zur Verfügung stehen können, ist es dazu nicht erforderlich, jedes der verschiedenartigen Betriebssignale über eine jeweilige (gesonderte) Übertragungsstrecke zwischen dem ersten Ende und dem zweiten Ende zu übermitteln. Die Konzentration der verschiedenartigen Betriebssignale auf die gemeinsame Übertragungsstrecke ermöglicht es vielmehr, auf solche gesonderten Übertragungsstrecken zu verzichten und dadurch das Gewicht der Kamerastabilisierungsvorrichtung zu minimieren sowie eine möglichst präzise Gewichtsverteilung zu erreichen.

Bei einigen Ausführungsformen kann der Signalkonzentrator dazu ausgebildet sein, die wenigstens zwei verschiedenartigen Betriebssignale an jeweiligen Signaleingängen zu empfangen und zu einem gemeinsamen Signalstrom zusammenzufassen. Insbesondere kann der Signalkonzentrator dazu mehrere Signaleingänge umfassen, um ein jeweiliges der wenigstens zwei verschiedenartigen Betriebssignale an einem jeweiligen Signaleingang beispielsweise von der zugeordneten Kamera und/oder der Kamerahaltevorrichtung empfangen zu können, wobei die wenigstens zwei verschiedenartigen Betriebssignale jedoch über einen gemeinsamen Ausgang an die gemeinsame Übertragungsstrecke übermittelt werden können. Grundsätzlich kann der Signalkonzentrator auch dazu ausgebildet sein, mehr als zwei verschiedenartige Betriebssignale zu einem gemeinsamen Signalstrom zusammenzufassen. Beispielsweise kann es vorgesehen sein, dass die Signalkonzentrationseinrichtung eine Ethernet-Schnittstelle umfasst, über welche verschiedenartige Betriebssignale, die über zwei bis vier Adernpaare übertragen werden, auf ein gemeinsames Adernpaar umgesetzt werden, welches die gemeinsame Übertragungsstrecke bildet. Der Signalkonzentrator kann dazu insbesondere einen Multiplexer umfassen.

Bei einigen Ausführungsformen kann der Signalextrahierer dazu ausgebildet sein, die wenigstens zwei verschiedenartigen Betriebssignale aus dem gemeinsamen Signalstrom zu extrahieren. Insbesondere kann der Signalextrahierer dazu einen Demultiplexer umfassen, um beispielsweise seriell übertragene verschiedenartige Betriebssignale über die gemeinsame Übertragungsstrecke empfangen, die einzelnen verschiedenartigen Betriebssignale jedoch extrahieren und insbesondere separat weiterleiten zu können, beispielsweise an das Funktionselement.

Die gemeinsame Übertragungsstrecke kann bei einigen Ausführungsformen ein Kameradatenkabel umfassen, wobei der Signalkonzentrator dazu ausgebildet sein kann, den gemeinsamen Signalstrom über das gemeinsame Kameradatenkabel an den Signalextrahierer zu übermitteln. Insbesondere kann das Kameradatenkabel als ein Glasfaserkabel und/oder als ein Koaxialkabel ausgebildet sein. Ferner kann das Kameradatenkabel im Inneren des Pendelarms verlaufen, wobei der Signalkonzentrator und der Signalextrahierer über das Kameradatenkabel miteinander verbunden sein können. Bei solchen Ausführungsformen können die wenigstens zwei verschiedenartigen Betriebssignale insbesondere als gemeinsamer Signalstrom über ein einziges Kameradatenkabel übermittelt werden, so dass nicht für jedes der Betriebssignale ein jeweiliges Kameradatenkabel vorgesehen sein muss. Durch die Signalkonzentration kann daher das Gewicht der Kamerastabilisierungsvorrichtung minimiert werden, um jedoch gleichzeitig eine Übertragung verschiedenartiger Betriebssignale und entsprechend verschiedenartiger Informationen an das jeweilige Ende des Pendelarms zu ermöglichen.

Bei einigen Ausführungsformen kann an dem zweiten Ende des Pendelarms eine elektrische Energiequelle angeordnet sein, die zur Versorgung der zugeordneten Kamera und/oder der Kamerahaltevorrichtung (z.B. Antriebsmotor) mit elektrischer Energie dient. Die Übertragung der elektrischen Energie bildet ein Stromversorgungssignal, das eines der wenigstens zwei verschiedenartigen Betriebssignale darstellt. Insbesondere kann die elektrische Energiequelle als Akkumulator oder Batterie ausgebildet sein. Durch die Anordnung an dem zweiten Ende des Pendelarms kann die elektrische Energiequelle insbesondere auch als Gegengewicht für die an dem ersten Ende des Pendelarms angeordnete Kamera fungieren und die Doppelfunktion der elektrischen Energieversorgung einerseits und des Stabilisierens und Ausbalancierens der Kamera andererseits erfüllen. Die Übertragungsstrecke kann bei einigen Ausführungsformen ein Stromversorgungskabel umfassen. Die Signalkonzentrationseinrichtung kann bei solchen Ausführungsformen dazu ausgebildet sein, zusätzlich zu dem Stromversorgungssignal ein weiteres der wenigstens zwei verschiedenartigen Betriebssignale über das Stromversorgungskabel zu übertragen.

Insbesondere kann die Signalkonzentrationseinrichtung dazu ausgebildet sein, die wenigstens zwei verschiedenartigen Betriebssignale und/oder den vorstehend genannten gemeinsamen Signalstrom auf das Stromversorgungskabel aufzumodulieren, um die wenigstes zwei verschiedenartigen Betriebssignale zu übertragen. Das ohnehin zur Stromversorgung der Kamera und/oder der Kamerahaltevorrichtung benötigte Stromversorgungskabel, über welches elektrische Energie insbesondere von dem zweiten Ende des Pendelarms zu dem ersten Ende des Pendelarms übertragen werden kann, kann bei solchen Ausführungsformen somit auch dazu genutzt werden, in einer zu einer Übertragungsrichtung des Stromversorgungssignals entgegengesetzten Richtung wenigstens ein weiteres Betriebssignal von dem ersten Ende des Pendelarms zu dem zweiten Ende des Pendelarms zu übertragen. Indem somit das häufig zwingend zur Energieversorgung benötigte Stromversorgungskabel auch zur Übertragung eines oder mehrerer weiterer Betriebssignale genutzt wird, kann auf ein eigens zu der Übertragung dieser weiteren Betriebssignale vorgesehenes Kabel verzichtet werden und das Gewicht der Kamerastabilisierungsvorrichtung entsprechend reduziert werden.

Die Erfindung bezieht sich daher auch auf eine Kamerastabilisierungsvorrichtung mit einem sich von einem ersten Ende zu einem zweiten Ende erstreckenden Pendelarm, welcher an dem ersten Ende eine Kamerahaltevorrichtung zum Halten einer zugeordneten Kamera und an dem zweiten Ende eine elektrischen Energiequelle zur Versorgung der Kamera und/oder der Kamerahaltevorrichtung mit elektrischer Energie aufweist, wobei die elektrische Energiequelle über ein in einem Innenraum des Pendelarms verlaufendes Stromversorgungskabel mit der Kamerahaltevorrichtung und/oder der zugeordneten Kamera verbindbar ist, und wobei eine Signalkonzentrationseinrichtung dazu ausgebildet ist, wenigstens ein Betriebssignal von der zugeordneten Kamera und/oder der Kamerahaltevorrichtung zu empfangen und über das Stromversorgungskabel an das zweite Ende des Pendelarms zu übertragen.

Ferner kann es bei einigen Ausführungsformen vorgesehen sein, dass sich abgesehen von dem Stromversorgungskabel - und optional einem Antennenkabel eines nachstehend noch näher erläuterten Funksenders zum Übermitteln eines Betriebssignals an einen externen Funkempfänger - kein weiteres Kabel im Innenraum des Pendelarms zwischen dem ersten Ende des Pendelarms und dem zweiten Ende des Pendelarms erstreckt. Insbesondere zur Übermittlung der verschiedenartigen Betriebssignale zwischen dem ersten Ende des Pendelarms und dem zweiten Ende des Pendelarms kann somit ausschließlich das ohnehin zwingend benötigte Stromversorgungskabel genutzt werden, ohne dass das Gewicht der Kamerastabilisierungsvorrichtung wesentlich erhöht wird.

Bei einigen Ausführungsformen kann an dem ersten Ende des Pendelarms ein erster Spannungswandler und an dem zweiten Ende des Pendelarms ein zweiter Spannungswandler angeordnet sein. Der zweite Spannungswandler kann dazu ausgebildet sein, einen elektrischen Spannungswert des Stromversorgungssignals der elektrischen Energiequelle zu einer erhöhten Versorgungsspannung zu erhöhen, wobei der erste Spannungswandler dazu ausgebildet sein kann, die erhöhte Versorgungsspannung auf einen an die zugeordnete Kamera und/oder die Kamerahaltevorrichtung angepassten Wert einer elektrischen Nutzversorgungsspannung zu verringern. Eine solche Erhöhung der Versorgungsspannung an dem zweiten Ende des Pendelarms kann es ermöglichen, ein Stromversorgungskabel mit einem geringeren Leistungsquerschnitt und daher einem geringeren Gewicht zu nutzen, um elektrische Energie von der elektrischen Energiequelle an die zugeordnete Kamera und/oder die Kamerahaltevorrichtung zu übertragen. Auch dadurch kann folglich das Gewicht der Kamerastabilisierungsvorrichtung verringert und die Gewichtsverteilung verbessert werden. Durch den an dem ersten Ende des Pendelarms angeordneten ersten Spannungswandler kann die Spannung hingegen wieder auf einen Spannungswert verringert werden, mit welchem die zugeordnete Kamera und/oder die Kamerahaltevorrichtung betrieben werden kann. Beispielsweise kann es vorgesehen sein, eine von der elektrischen Energiequelle bereitgestellte Versorgungsspannung mittels des zweiten Spannungswandlers auf 48 V oder auf 60 V zu erhöhen, um diese Spannung beispielsweise mittels des ersten Spannungswandlers auf eine Nutzversorgungsspannung von 12 V oder 24 V zu verringern. Die elektrische Energiequelle kann beispielsweise dazu ausgebildet sein, eine Versorgungsspannung von 12 V oder 24 V bereitzustellen. Die genannten Spannungswandler können insbesondere als Gleichspannungswandler ausgebildet sein und daher auch als DC-DC-Wandler bezeichnet werden.

Wie bereits erläutert, kann die Signalkonzentrationseinrichtung bei einigen Ausführungsformen dazu ausgebildet sein, die verschiedenartigen Betriebssignale optisch zwischen einem ersten Teil der Signalkonzentrationseinrichtung an dem ersten Ende des Pendelarms und einem zweiten Teil der Signalkonzentrationseinrichtung an dem zweiten Ende des Pendelarms zu übermitteln. Insbesondere kann eine solche Übermittlung über eine faseroptische Verbindung erfolgen.

Alternativ zu einem solchen faseroptischen Übertragungspfad kann bei einigen Ausführungsformen zwischen einem ersten Teil der Signalkonzentrationseinrichtung an dem ersten Ende des Pendelarms und einem zweiten Teil der Signalkonzentrationseinrichtung an dem zweiten Ende des Pendelarms eine Sichtverbindung bestehen (z.B. Luft oder Vakuum), wobei die Signalkonzentrationseinrichtung dazu ausgebildet sein kann, die wenigstens zwei verschiedenartigen Betriebssignale über die Sichtverbindung optisch zu übermitteln. Auch eine derartige Übermittlung der verschiedenartigen Betriebssignale kann insbesondere im Innenraum des Pendelarms erfolgen, wobei die Sichtverbindung die gemeinsame Übertragungsstrecke bildet. Eine solche Übermittlung der Betriebssignale kann somit vollständig kabellos erfolgen, so dass die Übertragung der Betriebssignale nicht mit einer Erhöhung des Gewichts der Kamerastabilisierungsvorrichtung einhergeht.

Ferner kann eine drahtlose Übermittlung der wenigstens zwei verschiedenartigen Betriebssignale erreicht werden, indem die Signalkonzentrationseinrichtung bei einigen Ausführungsformen dazu ausgebildet ist, die wenigstens zwei verschiedenartigen Betriebssignale über eine Funkverbindung zu übermitteln. Beispielsweise kann dazu zwischen einem ersten Teil der Signalkonzentrationseinrichtung an dem ersten Ende des Pendelarms und einem zweiten Teil der Signalkonzentrationseinrichtung an dem zweiten Ende des Pendelarms eine Bluetooth-Verbindung, eine WLAN/WiFi-Verbindung, eine Mobilfunk-Verbindung oder eine NFC-(Near Field Communication-)Verbindung bestehen. Die Signalkonzentrationseinrichtung kann an den beiden Enden des Pendelarms eine jeweilige Funkeinrichtung umfassen, welche zum Übertragen und/oder Empfangen der (elektromagnetischen) Betriebssignale ausgebildet ist. Bei solchen Ausführungsformen kann folglich die Funkverbindung die gemeinsame Übertragungsstrecke bilden, wobei wiederum die kabellose Übertragung der wenigstens zwei verschiedenartigen Betriebssignale eine Reduktion des Gewichts der Kamerastabilisierungsvorrichtung gegenüber einer kabelgebundenen Übertragung ermöglicht.

Bei einigen Ausführungsformen kann an dem zweiten Ende des Pendelarms ein Funksender angeordnet sein, welcher dazu ausgebildet ist, wenigstens eines der über die Übertragungsstrecke an das zweite Ende des Pendelarms übertragenen Betriebssignale über eine Funkverbindung an einen externen Funkempfänger zu senden. Beispielsweise kann mittels eines solchen Funksenders ein von dem ersten Ende des Pendelarms an das zweite Ende übermitteltes Bildsignal der Kamera an einen externen Funkempfänger gesendet werden, um die mittels des Bildsignals übermittelten Bilddaten an einem Bildschirm in einem Bildaufnahmestudio wiedergeben zu können und es beispielsweise einem Regisseur zu ermöglichen, den aufgenommenen Bildausschnitt zu überprüfen. Auch andersartige von dem ersten Ende des Pendelarms an das zweite Ende übermittelte Betriebssignale können von dem Funksender an einen externen Funkempfänger übermittelt werden, so dass beispielsweise auch ein Positionssensorsignal, ein Kamerazustandssignal, ein Objektiveinstellsignal, oder ein Inertialsensorsignal der zugeordneten Kamera an entfernter Stelle ausgewertet oder an einem externen Bildschirm dargestellt und überprüft werden können.

Die Anordnung des Funksenders an dem zweiten Ende des Pendelarms ermöglicht es zudem, auch den Funksender als Gegengewicht zu der zugeordneten Kamera zu nutzen. Darüber hinaus kann der Funksender bei einigen Ausführungsformen als eine Funksende- und Funkempfangseinrichtung ausgebildet sein, wobei über den Funksender bei solchen Ausführungsformen insbesondere auch Steuersignale für die zugeordnete Kamera empfangbar sein können. Diese Steuersignale können von der Signalkonzentrationseinrichtung insbesondere als Betriebssignale über die gemeinsame Übertragungsstrecke an die zugeordnete Kamera übermittelbar sein. Insofern können bei solchen Ausführungsformen insbesondere eine erste Art von Betriebssignalen, beispielsweise zur Übermittlung von Bilddaten, von dem ersten Ende des Pendelarms über die gemeinsame Übertragungsstrecke an das zweite Ende übermittelbar sein, während eine zweite Art von Betriebssignalen, beispielsweise ein Steuersignal, von dem zweiten Ende des Pendelarms über die gemeinsame Übertragungsstrecke in der entgegengesetzten Richtung an das erste Ende übermittelbar sein können. Bei dem Steuersignal kann es sich beispielsweise um Steuerbefehle zum Einstellen von Parametern eines Objektivs der zugeordneten Kamera und/oder Steuerbefehle zum Ein- oder Ausschalten der Kamera und/oder Steuerbefehle zum Starten oder Stoppen einer Aufnahme handeln.

Bei einigen Ausführungsformen kann dem Funksender eine kamerazugewandte Antenne zum Herstellen der Funkverbindung mit dem externen Funkempfänger zugeordnet sein, wobei die kamerazugewandte Antenne an dem ersten Ende des Pendelarms angeordnet ist. Die kamerazugewandte Antenne kann über ein innerhalb des Pendelarms verlaufendes Antennenkabel mit dem Funksender an dem zweiten Ende des Pendelarms verbunden sein. Insbesondere kann die kamerazugewandte Antenne als Antennenkabel ausgeführt sein, so dass sich das Antennenkabel ausgehend von dem Funksender durch den Pendelarm hindurch und aus dem ersten Ende des Pendelarms heraus erstrecken kann. Dies ermöglicht es, eine Antenne des an dem zweiten Ende des Pendelarms angeordneten Funksenders im Bereich der Kamera anzuordnen, so dass diese Antenne zumindest in solchen typischen Aufnahmesituationen, in welchen die Kamera durch entsprechendes Einstellen des Pendelarms von einem Boden beabstandet positioniert ist, nicht in unmittelbarer Bodennähe angeordnet ist, obwohl sich der an dem zweiten Ende angeordnete Funksender in der Nähe des Bodens befindet. Etwaige Abschattungseffekte bei der Übertragung der Betriebssignale aufgrund der Anordnung der Antenne in Bodennähe können somit in den meisten Aufnahmesituationen vermieden werden, während der Funksender gleichzeitig als Gegengewicht zu der zugeordneten Kamera genutzt werden kann. Ermöglicht wird eine solche Anordnung des Antennenkabels im Inneren des Pendelarms letztlich jedoch wiederum insbesondere dadurch, dass durch die vorstehend erläuterte Signalkonzentrationseinrichtung hinsichtlich der Übertragung der Betriebssignale zwischen dem ersten Ende des Pendelarms und dem zweiten Ende des Pendelarms über die gemeinsame Übertragungsstrecke ein Freiraum in dem Innenraum des Pendelarms gewonnen werden kann, welcher für die Anordnung des Antennenkabels zur Verfügung steht. Bei einigen Ausführungsformen kann das Antennenkabel auch als Übertragungsstrecke für weitere (andersartige) Betriebssignale dienen.

Bei einigen Ausführungsformen kann dem Funksender ferner eine kameraabgewandte Antenne zum Herstellen der Funkverbindung mit dem externen Funkempfänger zugeordnet sein, wobei die kameraabgewandte Antenne an dem zweiten Ende des Pendelarms angeordnet ist. Insbesondere kann dem Funksender sowohl eine kameraabgewandte Antenne als auch eine kamerazugewandte Antenne zum Herstellen der Funkverbindung zugeordnet sein, so dass der Funksender als ein Diversity/MIMO-System ausgebildet sein kann, um etwaige destruktive Interferenzen bei der Signalübertragung von einer der kameraabgewandten oder der kamerazugewandten Antenne zu dem externen Funkempfänger ausgleichen zu können. Insbesondere kann durch eine solche Anordnung zweier Antennen erreicht werden, dass sich in Aufnahmesituationen, in welchen das erste Ende oder das zweite Endes des Pendelarms in Bodennähe angeordnet ist, das jeweilige andere Ende von dem Boden entfernt befindet, so dass stets zumindest eine von dem Boden entfernte Antenne zur Signalübertragung zur Verfügung stehen kann und Abschattungseffekte aufgrund der Bodennähe der jeweiligen anderen Antenne ausgeglichen werden können.

Bei einigen Ausführungsformen kann die Signalkonzentrationseinrichtung mehrere Module aufweisen, welche dazu ausgebildet sind, die wenigstens zwei verschiedenartigen Betriebssignale über verschiedene Schnittstellenkonfigurationen zu übermitteln und/oder zu empfangen. Beispielsweise kann die Signalkonzentrationseinrichtung einen Universal Asynchronous Receiver Transmitter (UART), ein Controller Area Network (CAN), ein Local Interconnect Network (LIN), ein Ethernet-Modul, ein Serial Digital Interface (SDI), eine Bluetooth-Einrichtung, eine Mobilfunk-Einrichtung, eine NFC (Near Field Communication)-Einrichtung und/oder eine WLAN/WiFi-Einrichtung umfassen, um die wenigstens zwei verschiedenartigen Betriebssignale zu übermitteln und/oder zu empfangen. Ein solcher modularer Aufbau der Signalkonzentrationseinrichtung kann es insbesondere ermöglichen, die Kamerastabilisierungsvorrichtung flexibel mit verschiedenen Kameras und/oder Funktionselementen zu nutzen, um eine Anpassung an entsprechende von der Kamera und/oder dem Funktionselement unterstützte Schnittstellenkonfigurationen zu ermöglichen.

Die Signalkonzentrationseinrichtung kann bei einigen Ausführungsformen dazu ausgebildet sein, von der zugeordneten Kamera empfangene Bilddaten zu komprimieren und die komprimierten Bilddaten als Bildsignal über die gemeinsame Übertragungsstrecke zu übermitteln. Wie bereits erläutert, kann die zugeordnete Kamera insbesondere dazu ausgebildet sein, Bilddaten zu generieren, welche eine von der Kamera erzeugte Abbildung repräsentieren, wobei diese Bilddaten durch eines der wenigstens zwei verschiedenartigen Betriebssignale übermittelbar sein können. Durch ein Komprimieren der Bilddaten, welche insbesondere die größte zwischen dem ersten Ende des Pendelarm und dem zweiten Ende des Pendelarms zu übertragende Datenmenge darstellen können, kann die zu übertragende Datenmenge reduziert werden, wodurch wiederum erreicht werden kann, dass die Bilddaten über eine geringere Anzahl von Kabel und/oder dünnere Kabel übertragen werden können. Insbesondere kann die Signalkonzentrationseinrichtung dazu ausgebildet sein, die Bilddaten als einen mezzanine Codec zu kodieren, um eine verlustfreie Kompression zu erreichen. Der an dem jeweils anderen Ende des Pendelarms angeordnete Teil der Signalkonzentrationseinrichtung kann dazu ausgebildet sein, die empfangenen Bilddaten zu dekomprimieren, um diese beispielsweise an einen an dem zweiten Ende des Pendelarms als Funktionselement angeordneten Bildschirm zu übermitteln und dort wiedergeben zu können. Grundsätzlich kann eine solche Kompression der Bilddaten auch bei einer drahtlosen Übertragung der verschiedenartigen Betriebssignale vorgesehen sein.

Bei einigen Ausführungsformen kann an dem zweiten Ende des Pendelarms ein Bildschirm angeordnet sein, welcher dazu ausgebildet ist, von der zugeordneten Kamera erzeugte und über die gemeinsame Übertragungsstrecke übertragene Bilddaten wiederzugeben. Dies kann es insbesondere einem die Kamerastabilisierungsvorrichtung führenden Kameramann ermöglichen, die mittels der Kamera aufgenommene Szene an dem Bildschirm unmittelbar zu überprüfen, um gegebenenfalls eine Korrektur der Ausrichtung der Kamera vorzunehmen. Darüber hinaus können an dem Bildschirm auch sonstige in Form der verschiedenartigen Betriebssignale übermittelte Daten angezeigt werden, um einen Kameramann etwa über die Position der Kamera, einen Aufnahmezustand der Kamera und/oder etwaige Einstellungen eines Objektivs der Kamera informieren zu können. Zudem kann der Bildschirm auch als Gegengewicht zu der Kamera wirken.

Der Pendelarm kann bei einigen Ausführungsformen an dem ersten Ende und dem zweiten Ende offen oder werkzeuglos zu öffnen sein. Eine solche Ausbildung des Pendelarms kann einen einfachen Zugang zu dem Innenraum des Pendelarms ermöglichen, um beispielsweise ein Kameradatenkabel, welches die gemeinsame Übertragungsstrecke bildet, anordnen oder ausrichten zu können.

Ferner kann der Pendelarm rohrförmig ausgebildet sein.

Bei einigen Ausführungsformen kann eine Länge des Pendelarms veränderbar sein. Insbesondere kann der Pendelarm ein Innenrohr und ein Außenrohr aufweisen, welche zum Verändern der Länge des Pendelarms axial relativ zueinander verschiebbar sein können. Beispielsweise kann durch eine solche Längenveränderung ein Umfang einer Bewegung der Kamerahaltevorrichtung und somit der zugeordneten Kamera und/oder ein Radius einer Kreisbahn, auf welcher die Kamerahaltevorrichtung bewegbar ist, einstellbar sein.

Der Pendelarm kann bei einigen Ausführungsformen gelenkig, insbesondere kardanisch, mit einem Haltearm zum Tragen der Kamerastabilisierungsvorrichtung verbunden sein. Insbesondere kann die Kamerastabilisierungsvorrichtung über den Haltearm von einem Kameramann gehalten bzw. mittels des Haltearms an einem Körper des Kameramanns befestigbar sein. Durch eine solche gelenkige bzw. kardanische Aufhängung des Pendelarms kann insbesondere verhindert werden, dass sich Bewegungen des Kameramanns, beispielsweise während eines Laufens oder Rennens, auf die Kamera übertragen und sich deren Ausrichtung relativ zu dem Kameramann während einer solchen Bewegung verändert.

Die Kamerastabilisierungsvorrichtung kann zudem bei einigen Ausführungsformen einen Gurt umfassen, mittels dessen die Kamerastabilisierungsvorrichtung an einem Körper eines Benutzers befestigbar ist. Insbesondere kann der vorstehend genannte Haltearm an dem Gurt befestigt oder befestigbar sein, so dass ein Kameramann nicht das gesamte Gewicht der Kamerastabilisierungsvorrichtung und der damit verbundenen Komponenten mit den Armen tragen muss, sondern das Gewicht über den gesamten Körper abstützen kann. Die Ausbildung der Kamerastabilisierungsvorrichtung mit einem Pendelarm kann es bei einer entsprechenden Gewichtsverteilung der Kamerastabilisierungsvorrichtung zudem ermöglichen, dass die Kamera über den Gurt gehalten und automatisch stabilisiert ist, so dass der Kameramann ausschließlich für Veränderungen der Position der Kamera, jedoch nicht für das Ausbalancieren einer momentanen Position sorgen muss.

Die Erfindung wird im Folgenden rein beispielhaft anhand von Ausführungsbeispielen unter Bezugnahme auf die Zeichnungen erläutert. Gleiche oder gleichartige Elemente sind darin mit denselben Bezugszeichen gekennzeichnet. Es zeigen:
- Fig. 1: eine Darstellung einer von einem Kameramann getragenen Kamerastabilisierungsvorrichtung und
- Fig. 2A bis 2E: schematische Darstellungen jeweiliger Ausführungsformen der Kamerastabilisierungsvorrichtung.

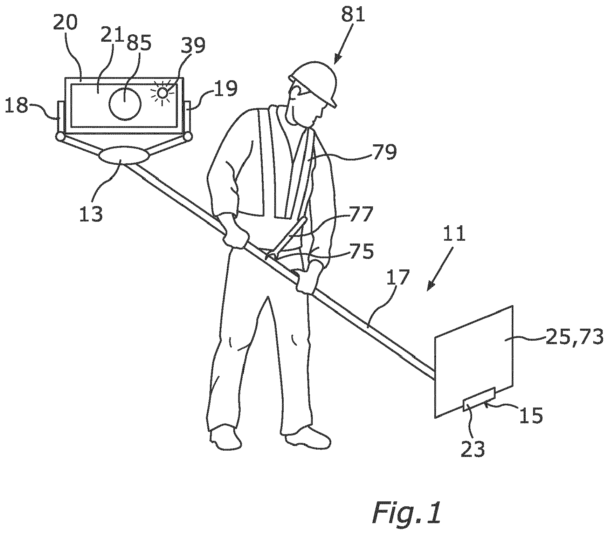

Fig. 1 zeigt eine Kamerastabilisierungsvorrichtung 11, welche einen sich von einem ersten Ende 13 zu einem zweiten Ende 15 erstreckenden Pendelarm 17 umfasst, wobei an dem ersten Ende 13 eine Kamerahaltevorrichtung 19 zum Halten einer zugeordneten Kamera 21 angeordnet ist. Die Kamerahaltevorrichtung 19 weist ein Gestell 18 sowie einen relativ zu dem Gestell 18 verschwenkbaren Rahmen 20 auf, in welchem die zugeordnete Kamera 21 eingesetzt ist. Das Gestell 18 kann zudem drehbar an dem ersten Ende 13 des Pendelarms 17 befestigt sein, so dass durch Drehen des Gestells 18 eine Ausrichtung und durch Verschwenken des Rahmens 20 eine Neigung der Kamera 21 einstellbar sein kann.

Die zugeordnete Kamera 21 kann insbesondere als eine Bewegtbildkamera ausgebildet sein, um beispielsweise eine Szene für einen Kinofilm oder eine Fernsehsendung aufnehmen zu können. Um einem Schauspieler oder einem Moderator anzeigen zu können, dass eine Aufnahme gestartet wurde, ist an der Außenseite der Kamera 21 ein Rotlicht 39 ausgebildet, welches als Tally bezeichnet werden und beispielsweise leuchten oder aufblinken kann, während eine Aufnahme durchgeführt wird. Darüber hinaus weist die Kamera 21 ein Objektiv 85 auf, welches insbesondere einstellbar sein kann, so dass eine Brennweite, ein Fokuswert und/oder eine Irisblendenöffnung der Kamera 21 veränderbar sein können/kann. Zum Einstellen des Objektivs 85 können beispielsweise nicht gezeigte Objektiv-Stellmotoren vorgesehen sein, welche dazu ausgebildet sein können, einen jeweiligen Objektivring des Objektivs 85 anzutreiben, wobei die genannten Parameter durch Bewegen eines jeweiligen Objektivrings in eine bestimmte Drehstellung einstellbar sein können. Steuerbefehle für solche Objektiv-Stellmotoren können beispielsweise über Funk an die Kamera 21 und/oder die Kamerastabilisierungsvorrichtung 11 übertragbar sein.

Die Kamerastabilisierungsvorrichtung 11 ist insbesondere dazu vorgesehen, die Kamera 21 im Raum positionieren und ausbalancieren zu können. Dazu ist der Pendelarm 17 der Kamerastabilisierungsvorrichtung 11 über eine kardanische Verbindung 75 kardanisch mit einem Haltearm 77 verbunden, über welchen die Kamerastabilisierungsvorrichtung 11 von einem Kameramann 81 gehalten werden kann. Um ein Tragen der Kamera 21 sowie der Kamerastabilisierungsvorrichtung 11 zu erleichtern, ist der Haltearm 75 an einem Gurt 79 befestigt, so dass der Kameramann 81 die Kamerastabilisierungsvorrichtung 11 nicht mit den Armen tragen muss, sondern deren Gewicht über den gesamten Körper abstützen kann.

Indem der Pendelarm 17 kardanisch mit dem Haltearm 77 verbunden ist, kann die Kamera 21 insbesondere ausbalanciert gehalten werden, ohne infolge von Bewegungen des Kameramanns 81, beispielsweise einem Rennen zum schnellen Verändern der Position der Kamera 21, relativ zu dem Kameramann 81 ausgelenkt zu werden. Um die Kamera 21 im Raum zu stabilisieren, erstreckt sich der Pendelarm 17 über die kardanische Verbindung 75 hinaus zu dem zweiten Ende 15, an welchem zudem eine Funktionselementhaltevorrichtung 23 zum Halten eines zugeordneten Funktionselements 25 angeordnet ist. Dieses Funktionselement 25 kann insbesondere ein Gegengewicht zu der zugeordneten Kamera 21 bilden, welches es ermöglicht, den Schwerpunkt der Kamerastabilisierungsvorrichtung 11 bei gehaltener Kamera 21 in den Bereich der kardanischen Verbindung 75 zu verlegen, so dass die Kamera 21 gegen ungewünschte Bewegungen stabilisiert wird. Hingegen kann die Kamera 21 durch geringfügige, jedoch bewusst von dem Kameramann 81 aufgebrachte Kräfte mittels des Pendelarms 17 verschwenkt werden, um eine Position der Kamera 21 relativ zu dem Kameramann 81 zu verändern.

Bei der in Fig. 1 veranschaulichten Ausführungsform ist das Funktionselement 25, welches von der Funktionselementhaltevorrichtung 23 der Kamerastabilisierungsvorrichtung 11 gehalten ist, als ein Bildschirm 73 ausgebildet. Ein solcher Bildschirm 73 kann es dem Kameramann 81 insbesondere ermöglichen, von der Kamera 21 aufgenommene Bilddaten zu überprüfen und zu kontrollieren, ob die Kamera 21 korrekt ausgerichtet ist. Darüber hinaus können an dem Bildschirm 73 insbesondere weitere die Kamera 21 betreffende Informationen dargestellt werden, welche der Kameramann 81 während einer Aufnahme berücksichtigen kann. Beispielsweise kann auch an dem Bildschirm 73 angezeigt werden, ob das Rotlicht 39 der Kamera 21 leuchtet und sich die Kamera 21 in einem Aufnahmezustand befindet. Ebenso kann dargestellt werden, wenn die Kamera 21 zwar eingeschaltet ist, jedoch keine Aufnahme erfolgt und sich die Kamera 21 in einem Inaktivitätszustand befindet, oder es kann angezeigt werden, wenn die Kamera 21 ausgeschaltet ist. Darüber hinaus können beispielsweise Einstellungen des Objektivs 85 der Kamera 21 an dem Bildschirm 73 angezeigt werden, so dass der Kameramann 81 überprüfen kann, ob die korrekten Objektiveinstellungen vorgenommen wurden.

Während es eine solche Kamerastabilisierungsvorrichtung 11 grundsätzlich ermöglicht, die zugeordnete Kamera 21 ausbalanciert im Raum auszurichten und über den Gurt 79 zu tragen, ist es dennoch erforderlich, die Kamerastabilisierungsvorrichtung 11 möglichst leicht auszubilden, um ein Tragen auch über längere Aufnahmezeiten zu ermöglichen. Zudem ist bei einer solchen Kamerastabilisierungsvorrichtung 11 eine möglichst präzise Gewichtsverteilung erforderlich, um den Schwerpunkt der Kamerahaltevorrichtung 11 festlegen und die Kamera 21 ausbalancieren zu können. Dies wird jedoch dadurch erschwert, dass Betriebssignale von der Kamera 21 bzw. dem ersten Ende 13 des Pendelarms 17 an dessen zweites Ende 15 übertragen werden müssen, um die entsprechenden Informationen, etwa Bilddaten oder Einstellungen des Objektivs 85, an dem Bildschirm 73 darstellen zu können. Um jedoch solche und insbesondere verschiedenartige Betriebssignale der Kamera 21 übertragen zu können, ist meist eine Vielzahl von in dem Pendelarm 17 verlaufenden Kabelverbindungen, die von dem ersten Ende 13 zu dem zweiten Ende 15 führen, erforderlich, welche das Gewicht der Kamerastabilisierungsvorrichtung 11 maßgeblich erhöhen können. Zudem kann sich die Führung einer solchen Vielzahl von Kabeln nachteilig auf die Gewichtsverteilung der Kamerastabilisierungsvorrichtung 11 auswirken.

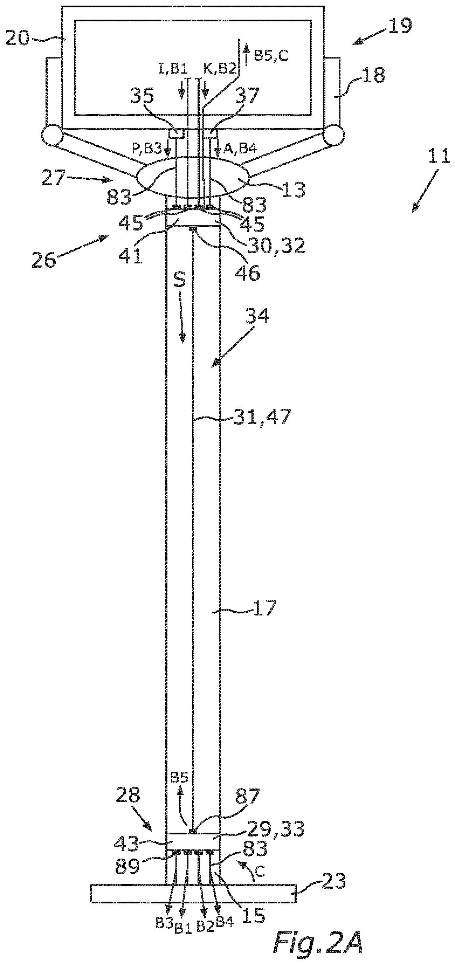

Wie die Fig. 2A bis 2E veranschaulichen, kann diesem Problem durch die hierin offenbarte Kamerastabilisierungsvorrichtung 11 jedoch dadurch begegnet werden, dass an dem ersten Ende 13 des Pendelarms 17 ein erster Teil 27 einer Signalkonzentrationseinrichtung 26 und an dem zweiten Ende 15 des Pendelarms 17 ein zweiter Teil 28 der Signalkonzentrationseinrichtung 26 angeordnet sind, welche dazu ausgebildet sind, wenigstens zwei verschiedenartige Betriebssignale B1, B2, B3, B4 und B5 zwischen dem ersten Ende 13 des Pendelarms 17 und dem zweiten Ende 15 des Pendelarms 17 über eine gemeinsame Übertragungsstrecke 31 zu übermitteln.

Der erste Teil 27 der Signalkonzentrationseinrichtung 26 kann beispielsweise einen Signalsender 32 aufweisen, und der zweite Teil 28 der Signalkonzentrationseinrichtung 26 kann beispielsweise einen zugeordneten Signalempfänger 29 aufweisen, und/oder umgekehrt. Der erste Teil 27 der Signalkonzentrationseinrichtung 26 kann beispielsweise dazu ausgebildet sein, von der zugeordneten Kamera 21 und/oder der Kamerahaltevorrichtung 19 wenigstens zwei verschiedenartige Betriebssignale B1, B2, B3 und B4 zu empfangen und die wenigstens zwei verschiedenartigen Betriebssignale B1, B2, B3 und B4 über die gemeinsame Übertragungsstrecke 31 an den Signalempfänger 29 zu übermitteln.

Beispielsweise kann es, wie Fig. 2A zeigt, vorgesehen sein, dass mit der Kamerahaltevorrichtung 19 ein Positionssensor 35 sowie ein Inertialsensor 37 verbunden sind, wobei der Positionssensor 35 dazu ausgebildet ist, ein Positionssensorsignal P zu erzeugen, welches eine Position der Kamera 21 und/oder der Kamerahaltevorrichtung 19 im Raum repräsentiert, und wobei der Inertialsensor 37 dazu ausgebildet ist, ein Inertialsensorsignal A zu erzeugen, welches eine Beschleunigung der Kamerahaltevorrichtung 19 und somit auch der Kamera 21 repräsentiert.

Die Signale P und A des Positionssensors 35 und des Inertialsensors 37 stellen insofern verschiedenartige Betriebssignale B3 und B4 dar, welche über ein jeweiliges Datenkabel 83 an einen jeweiligen Signaleingang 45 des ersten Teils 27 der Signalkonzentrationseinrichtung 26 übermittelt werden können. Zudem sind mit jeweiligen Signaleingängen 45 des ersten Teils 27 der Signalkonzentrationseinrichtung 26 zwei weitere Datenkabel 83 verbunden, welche dazu vorgesehen sind, ein von der Kamera 21 erzeugtes Bildsignal I sowie ein Kamerazustandssignal K, das einen Aufnahmezustand, einen Inaktivitätszustand und/oder einen ausgeschalteten Zustand der Kamera 21 repräsentiert, als weitere verschiedenartige Betriebssignale B1 und B2 zu empfangen und an den ersten Teil 27 der Signalkonzentrationseinrichtung 26 zu übermitteln.

Der erste Teil 27 der Signalkonzentrationseinrichtung 26 umfasst bei der in Fig. 2A gezeigten Ausführungsform einen Signalkonzentrator in Form eines Multiplexers 41, welcher dazu ausgebildet ist, die parallel über die Signaleingänge 45 empfangenen Betriebssignale B1, B2, B3 und B4 zu einem seriellen gemeinsamen Signalstrom S zusammenzufassen und diesen gemeinsamen Signalstrom S über einen Signalausgang 46 des Signalsenders 32 und die gemeinsame Übertragungsstrecke 31 an den Datenempfänger 29 des zweitens Teil 28 der Signalkonzentrationseinrichtung 26 zu übermitteln. Die gemeinsame Übertragungsstrecke 31 umfasst dazu ein Kameradatenkabel 47, welches insbesondere als ein Glasfaserkabel eine faseroptische Verbindung zwischen dem ersten Teil 27 und dem zweiten Teil 28 der Signalkonzentrationseinrichtung 26 oder als ein elektrisches Kabel eine elektrische Verbindung zwischen dem ersten Teil 27 und dem zweiten Teil 28 der Signalkonzentrationseinrichtung 26 herstellen kann. Ferner kann das Kameradatenkabel 47 beispielsweise als Koaxialkabel ausgebildet sein.

Der zweite Teil 28 der Signalkonzentrationseinrichtung 26 umfasst einen Signalextrahierer in Form eines Demultiplexers 43. Der Demultiplexer 43 ist dazu ausgebildet, den gemeinsamen Signalstrom S an einem Signaleingang 87 des Signalempfängers 29 zu empfangen und die verschiedenartigen Betriebssignale B1, B2, B3 und B4 aus dem gemeinsamen Signalstrom S zu extrahieren. Entsprechend können die jeweiligen Betriebssignale B1, B2, B3 und B4 von dem zweiten Teil 28 der Signalkonzentrationseinrichtung 26 an jeweiligen Signalausgängen 89 und wiederum über jeweilige Datenkabel 83 an die Funktionselementhaltevorrichtung 23 und/oder das zu haltende Funktionselement 25, insbesondere den Bildschirm 73, übermittelt werden.

Eine derartige Signalkonzentration mittels der Signalkonzentrationseinrichtung 26 ermöglicht es somit, die verschiedenartigen Betriebssignale B1, B2, B3 und B4, welche insbesondere von verschiedenen Elementen und/oder Einrichtungen, beispielsweise einem Bildsensor der Kamera 21 und dem Positionssensor 35, generiert werden, zu dem gemeinsamen Signalstrom S zusammenzufassen und über lediglich ein Kameradatenkabel 47 von dem ersten Ende 13 zu dem zweiten Ende 15 des Pendelarms 17 zu übermitteln. Anstelle jeweiliger Kabel und beispielsweise von dem ersten Ende 13 zu dem zweiten Ende 15 des Pendelarms 17 durchgehender Kabel 83 für die einzelnen Betriebssignale B1, B2, B3 und B4 ist daher lediglich das gemeinsame Kameradatenkabel 47 von dem ersten Teil 27 zu dem zweiten Teil 28 der Signalkonzentrationseinrichtung 26 geführt, so dass das Gewicht der Kamerastabilisierungsvorrichtung 11 durch dieses Einsparen von Kabeln reduziert und auch die Gewichtsverteilung der Kamerastabilisierungseinrichtung 11 verbessert werden kann. Zudem verläuft die gemeinsame Übertragungsstrecke 31 bzw. das Kameradatenkabel 47 in einem Innenraum 34 des Pendelarms 17, so dass das Kameradatenkabel 47 nicht außerhalb des Pendelarms 17 geführt ist und gegebenenfalls Bewegungen des Kameramanns 81 einschränken könnte. Dazu ist der Pendelarm 17 insbesondere rohrförmig ausgebildet.

Darüber hinaus kann es jedoch auch vorgesehen sein, über die gemeinsame Übertragungsstrecke 31 wenigstens ein weiteres, zu den Betriebssignalen B1, B2, B3 und B4 andersartiges Betriebssignal B5 von einem Signalsender 33 des zweiten Teils 28 der Signalkonzentrationseinrichtung 26 über die gemeinsame Übertragungsstrecke 31 an den ersten Teil 27 der Signalkonzentrationseinrichtung 26 zu übermitteln, welcher zum Empfangen der Betriebssignale B5 einen zugeordneten Signalempfänger 30 umfassen kann. Bei den im Vergleich zu den Betriebssignalen B1, B2, B3 und B4 in der entgegengesetzten Richtung übermittelten Betriebssignalen B5 kann es sich insbesondere um ein Steuersignal C für die zugeordnete Kamera 21 handeln, das beispielsweise an dem Funktionselement 25 einstellbar sein kann. Ein solches Steuersignal C kann insbesondere Einstellungen des Objektivs 85 betreffen, wobei Parameter des Objektivs 85 beispielsweise über in den Figuren nicht gezeigte Objektiv-Stellmotoren einstellbar sein können, so dass sich das Steuersignal C auf die Ansteuerung solcher Objektiv-Stellmotoren beziehen kann. Dementsprechend kann der Signalausgang 46 des ersten Teils 27 der Signalkonzentrationseinrichtung 26 hinsichtlich des Betriebssignals B5 als Signaleingang des Signalempfängers 30 wirken, um das empfangenen Steuersignal C an die Kamera 21 oder das Objektiv 85 übermitteln zu können. Ferner kann ein Steuersignal C beispielsweise dazu dienen, die Kamera 21 ein- und/oder auszuschalten und/oder eine Aufnahme zu starten und/oder zu stoppen.

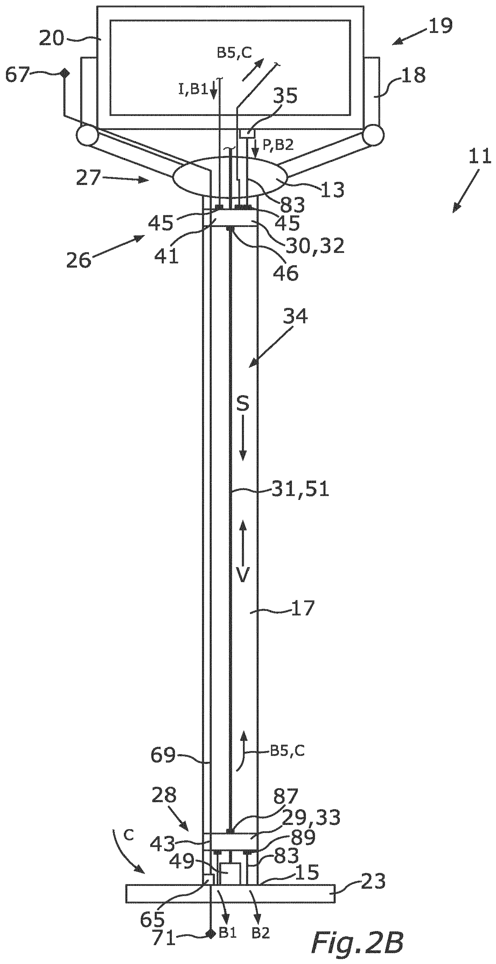

Fig. 2B veranschaulicht schematisch eine weitere Ausführungsform der Kamerastabilisierungsvorrichtung 11, bei welcher an dem zweiten Ende 15 des Pendelarms 17 eine elektrische Energiequelle 49 zur Versorgung der zugeordneten Kamera 21 und/oder der Kamerahaltevorrichtung 19 mit elektrischer Energie angeordnet ist. Die elektrische Energiequelle 49 kann insofern auch ein Funktionselement 25 darstellen, welches von der Funktionselementhaltevorrichtung 23 gehalten sein kann. Die Anordnung der elektrischen Energiequelle 49 an dem zweiten Ende 15 des Pendelarms 17 ermöglicht es insbesondere, die elektrische Energiequelle 49 als Gegengewicht zu der Kamera 21 zu nutzen und die Kamerastabilisierungsvorrichtung 11 dadurch auszubalancieren. Insbesondere kann die elektrische Energiequelle 49 dazu vorgesehen sein, die mit der Kamerahaltevorrichtung 19 verbundene zugeordnete Kamera 21 mit elektrischer Energie zu versorgen, wozu die elektrische Energiequelle 49 ein Stromversorgungssignal V mittels eines Stromversorgungskabels 51 an das erste Ende 13 des Pendelarms 17 übertragen kann. Das Stromversorgungssignal V bildet ein Betriebssignal im Sinne der vorliegenden Offenbarung. Die elektrische Energiequelle 49 kann alternativ oder zusätzlich auch dazu vorgesehen sein, die Kamerahaltevorrichtung 19 selbst mit elektrischer Energie zu versorgen (beispielsweise einen Antriebsmotor der Kamerahaltevorrichtung 19). Da der Rahmen 20 der Kamerahaltevorrichtung 19 relativ zu dem Gestell 18 und das Gestellt 18 relativ zu dem Pendelarm drehbar sind, kann durch entsprechendes Ansteuern der Kamerahaltevorrichtung 19 auch die Ausrichtung und/oder Neigung der Kamera 21 veränderbar sein, was insbesondere durch elektrisches Ansteuern der Kamerahaltevorrichtung 19 erfolgen kann. Bei der elektrischen Energiequelle 49 kann es sich insbesondere um eine Batterie oder einen Akkumulator handeln.

Um wiederum eine Gewichtsreduktion der Kamerastabilisierungsvorrichtung 11 erreichen, jedoch verschiedenartige Betriebssignale B1 und/oder B2 von dem ersten Ende 13 des Pendelarms 17 an das zweite Ende 15 übertragen zu können, ist der erste Teil 27 der Signalkonzentrationseinrichtung 26 bei dieser Ausführungsform dazu ausgebildet, die Betriebssignale B1 und/oder B2 über das Stromversorgungskabel 51 an den zweiten Teil 28 der Signalkonzentrationseinrichtung 26 zu übermitteln. Die verschiedenartigen Betriebssignale B1 und/oder B2 können beispielsweise ein Bildsignal I und ein Positionssensorsignal P umfassen. Insbesondere kann der erste Teil 27 der Signalkonzentrationseinrichtung 26 dazu ausgebildet sein, die Betriebssignale B1 und B2 auf das Stromversorgungssignal V aufzumodulieren, wobei durch dieses Übertragen der Betriebssignale B1 und/oder B2 über das Stromversorgungskabel 51 lediglich das ohnehin zur Versorgung der zugeordneten Kamera 21 und/oder der Kamerahaltevorrichtung 19 mit elektrischer Energie benötigte Stromversorgungskabel 51 in dem Innenraum 34 des Pendelarms 17 angeordnet werden muss, wohingegen auf zusätzliche Kabel zur Übertragung der insgesamt drei Betriebssignale B1, B2 und V verzichtet werden kann.

Grundsätzlich kann eine solche Stromversorgung mittels eines von einer an dem zweiten Ende 15 des Pendelarms 17 angeordneten elektrischen Energiequelle 49 zu dem ersten Ende 13 des Pendelarms 17 verlaufenden Stromversorgungskabels 51 auch bei Ausführungsformen vorgesehen sein, bei welchen der erste Teil 27 der Signalkonzentrationseinrichtung 26 dazu ausgebildet ist, die verschiedenartigen Betriebssignale B1 und B2 und/oder B3 und B4, wie anhand von Fig. 2A erläutert, über ein Kameradatenkabel 47 zu übertragen. Bei solchen Ausführungsformen können folglich zusätzlich zu dem Stromversorgungskabel 51 auch ein oder mehrere Kameradatenkabel 47 in dem Innenraum 34 des Pendelarms 17 angeordnet sein, wobei über zumindest eines der Kameradatenkabel 47 wenigstens zwei verschiedenartige Betriebssignale B1, B2, B3 und/oder B4 übertragen werden können und/oder wobei wenigstens zwei verschiedenartige Betriebssignale B1, B2, B3, B4 und/oder V über das Stromversorgungskabel 51 übertragen werden können. Zudem kann bei einigen Ausführungsformen auch das erläuterte Betriebszustandssignal B5 über das Kameradatenkabel 47 oder das Stromversorgungskabel 51 übermittelt werden.

Darüber hinaus ist bei der anhand von Fig. 2B veranschaulichten Ausführungsform an dem zweiten Ende 15 des Pendelarms 17 ein Funksender 65 angeordnet, welcher dazu ausgebildet ist, an dem zweiten Teil 28 der Signalkonzentrationseinrichtung 26 empfangene Betriebssignale B1 und B2 über eine Funkverbindung an einen nicht gezeigten externen Funkempfänger zu senden. Beispielsweise kann es vorgesehen sein, das als erstes Betriebssignal B1 empfangene Bildsignal I an einen externen Funkempfänger zu übertragen, so dass die entsprechenden Bilddaten beispielsweise an einem anderen Ort in einem Bildaufnahmestudio wiedergegeben und beispielsweise von einem Regisseur überprüft werden können. Zudem kann auch der Funksender 65 als ein Gegengewicht zu der Kamera 21 wirken.

Um jedoch eine Störung des von dem Funksender 65 ausgesandten Funksignals in Aufnahmesituationen zu verhindern, in welchen das zweite Ende 15 des Pendelarms 17 nahe des Bodens angeordnet ist, ist der Funksender 65 über ein in dem Innenraum 34 des Pendelarms 17 zu dem ersten Ende 13 und der Kamerahaltevorrichtung 19 geführtes Antennenkabel 69 mit einer kamerazugewandten Antenne 67 verbunden, so dass in solchen Aufnahmesituationen die Funkverbindung über die dann nicht in Bodennähe angeordnete kamerazugewandte Antenne 67 hergestellt werden kann. Zudem ist der Funksender 65 auch mit einer kameraabgewandten Antenne 71 verbunden, welche an dem zweiten Ende 15 des Pendelarms 17 angeordnet ist, so dass der Funksender 65 ein Diversity-/MIMO-System bildet und in umgekehrten Aufnahmesituationen, in welchen die Kamera 21 nahe am Boden angeordnet ist, eine stabile Funkverbindung über die kameraabgewandte Antenne 71 hergestellt werden kann. Auch das zusätzliche Führen des Antennenkabels 69 durch den Innenraum 34, um die kamerazugewandte Antenne 67 mit dem Funksender 65 verbinden zu können, wird letztlich durch die Signalkonzentration und das Übertragen der Betriebssignale B1 und B2 über das Stromversorgungskabel 51 und/oder ein gemeinsames Kameradatenkabel 47 ermöglicht, indem der durch das Verzichten auf gesonderte Kabel entstehende Freiraum in dem Innenraum 34 des Pendelarms 17 zum Führen des Antennenkabels 69 genutzt werden kann.

Überdies kann bei manchen Ausführungsformen das Antennenkabel 69 (anstelle des Kameradatenkabels 47) als gemeinsame Übertragungsstrecke 31 für mehrere verschiedenartige Betriebssignale B1, B2, B3, B4 und/oder B5 genutzt werden.

Ferner kann der Funksender 65 bei einigen Ausführungsformen auch als Funksende- und Funkempfangseinrichtung sowie dazu ausgebildet sein, die Steuersignale C für die Kamera 21 und/oder die Kamerahaltevorrichtung 19 über eine Funkverbindung zu empfangen. Die an der Funksende- und Funkempfangseinrichtung empfangenen Steuersignale C können sodann über die gemeinsame

Übertragungsstrecke 31, insbesondere das Kameradatenkabel 47 und/oder das Stromversorgungskabel 51, als Betriebssignale B5 an den ersten Teil 27 der Signalkonzentrationseinrichtung 26 übermittelt werden. Insofern kann bei einigen Ausführungsformen beispielsweise eine erste Art von Betriebssignalen B1, insbesondere das Bildsignal I, in einer ersten Richtung von dem ersten Teil 27 der Signalkonzentrationseinrichtung 26 über die gemeinsame Übertragungsstrecke 31 an den zweiten Teil 28 der Signalkonzentrationseinrichtung 26 übermittelbar sein, während eine zweite Art von Betriebssignalen, insbesondere das Steuersignal C für die Kamera 21 und/oder die Kamerahaltevorrichtung 19, in der entgegengesetzten Richtung von dem zweiten Teil 28 der Signalkonzentrationseinrichtung 26 über die gemeinsame Übertragungsstrecke 31 an den ersten Teil 27 der Signalkonzentrationseinrichtung 26 übermittelbar sein kann.

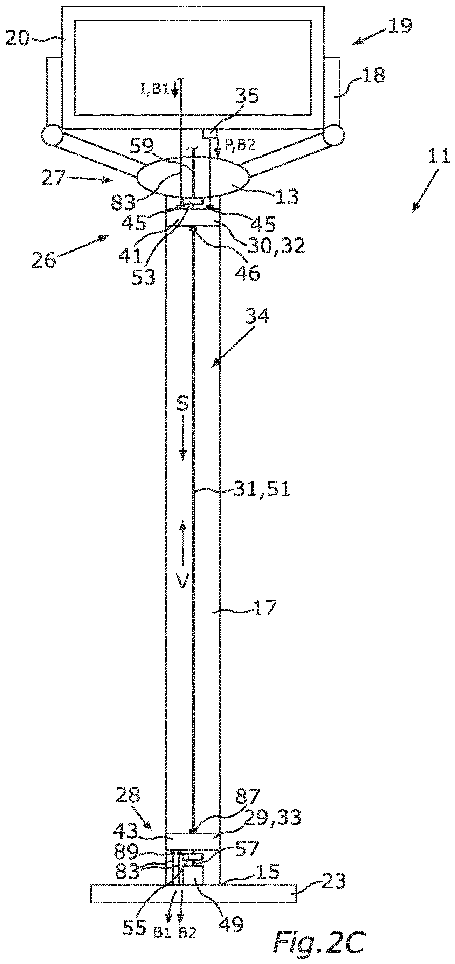

Fig. 2C zeigt eine weitere Ausführungsform, bei welcher der erste Teil 27 der Signalkonzentrationseinrichtung 26 dazu ausgebildet ist, die Betriebssignale B1 und B2 als einen gemeinsamer Signalstrom S über ein Stromversorgungskabel 51 an den zweiten Teil 28 der Signalkonzentrationseinrichtung 26 zu übermitteln. Bei dieser Ausführungsform sind jedoch zusätzlich an dem ersten Ende 13 des Pendelarms 17 ein erster Spannungswandler 53 und an dem zweiten Ende 15 ein zweiter Spannungswandler 55 angeordnet. Der zweite Spannungswandler 55 ist dazu ausgebildet, eine von der elektrischen Energiequelle 49 bereitgestellte Versorgungsspannung zu einer erhöhten Versorgungsspannung zu erhöhen, so dass das Stromversorgungskabel 51 zum Übertragen des Stromversorgungssignals V von dem zweiten Teil 28 der Signalkonzentrationseinrichtung 26 zu dem ersten Teil 27 der Signalkonzentrationseinrichtung 26 im Vergleich zu einem Versorgungsspannungsstromkabel 57, über welches die elektrische Energiequelle 49 mit dem zweiten Spannungswandler 55 verbunden ist, dünner ausgebildet sein kann. Der erste Spannungswandler 53 ist hingegen dazu ausgebildet, die erhöhte Versorgungsspannung auf eine an die zugeordnete Kamera 21 und/oder die Kamerahaltevorrichtung 19 angepasste Nutzversorgungsspannung zu verringern, so dass die elektrische Energie wiederum über ein gegenüber dem Stromversorgungskabel 51 verdicktes Nutzversorgungsspannungsstromkabel 59 weitergeleitet werden kann. Indem eine solche Erhöhung der Versorgungsspannung an dem zweiten Ende 15 des Pendelarms 17 das Verwenden eines dünneren Stromversorgungskabels 47 ermöglicht, kann wiederum das Gewicht der Kamerastabilisierungsvorrichtung 11 reduziert werden.

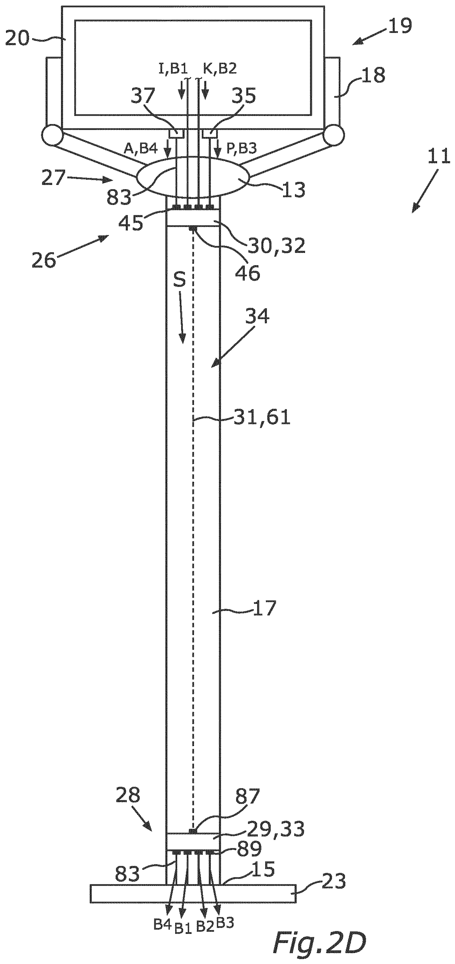

Bei der anhand von Fig. 2D veranschaulichten Ausführungsform ist der erste Teil 27 der Signalkonzentrationseinrichtung 26 dazu ausgebildet, die verschiedenartigen Betriebssignale B1, B2, B3 und B4 über eine Sichtverbindung 61, welche insofern die Übertragungsstrecke 31 bildet, optisch an den zweiten Teil 28 der Signalkonzentrationseinrichtung 26 zu übertragen. Auch diese Sichtverbindung besteht in dem Innenraum 34 des Pendelarms 17, wobei bei einer derartigen Übertragung vollständig auf in dem Innenraum 34 anzuordnende Kabel zur Übertragung der verschiedenartigen Betriebssignale B1, B2, B3 und B4 verzichtet werden kann. Zudem kann es vorgesehen sein, das Betriebssignal B5 oder mehrere verschiedenartige Betriebssignale in der Gegenrichtung über die Sichtverbindung 61 zu übertragen.

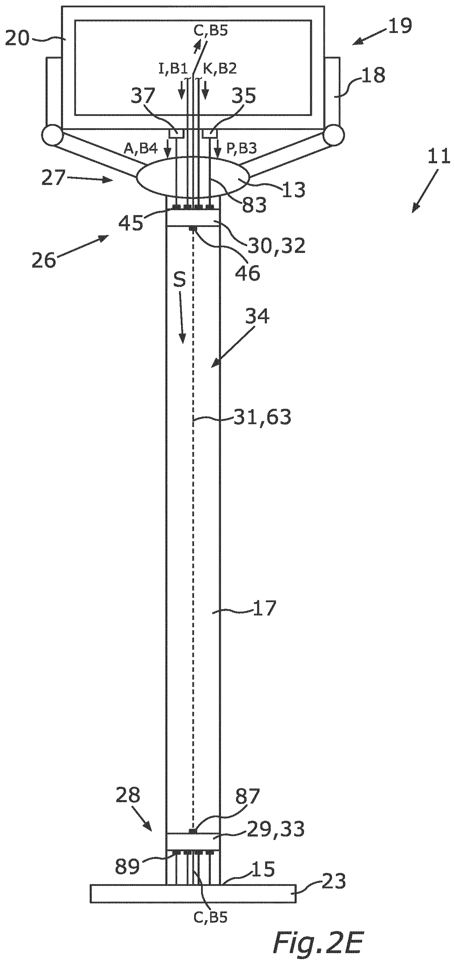

Bei der anhand von Fig. 2E veranschaulichten Ausführungsform ist ebenfalls eine drahtlose Übermittlung der verschiedenartigen Betriebssignale B1, B2, B3, B4 und/oder B5 vorgesehen, wobei die gemeinsame Übertragungsstrecke 31 durch eine Funkverbindung 63 zwischen dem ersten Teil 27 der Signalkonzentrationseinrichtung 26 an dem ersten Ende 13 des Pendelarms 17 und dem zweiten Teil 27 der Signalkonzentrationseinrichtung 26 an dem zweiten Ende 15 des Pendelarms 17 realisiert ist. Insbesondere kann es sich bei dieser Funkverbindung 63 um eine Bluetooth-, eine NFC-(Near Field Communication-), Mobilfunk- und/oder WLAN/WiFi-Verbindung handeln.

### Bezugszeichenliste

- 11: Kamerastabilisierungsvorrichtung
- 13: erste Ende
- 15: zweites Ende
- 17: Pendelarm
- 18: Gestell
- 19: Kamerahaltevorrichtung
- 20: Rahmen
- 21: Kamera
- 23: Funktionselementhaltevorrichtung
- 25: Funktionselement
- 26: Signalkonzentrationseinrichtung
- 27: erster Teil der Signalkonzentrationseinrichtung
- 28: zweiter Teil der Teil der Signalkonzentrationseinrichtung
- 29: Signalempfänger
- 30: Signalempfänger
- 31: Übertragungsstrecke
- 32: Signalsender
- 33: Signalsender
- 34: Innenraum
- 35: Positionssensor
- 37: Inertialsensor
- 39: Rotlicht/Tally
- 41: Multiplexer
- 43: Demultiplexer
- 45: Signaleingang
- 46: Signalausgang
- 47: Kameradatenkabel
- 49: elektrische Energiequelle
- 51: Stromversorgungskabel
- 53: erster Spannungswandler
- 55: zweiter Spannungswandler
- 57: Versorgungsspannungsstromkabel
- 59: Nutzversorgungsspannungsstromkabel
- 61: Sichtverbindung
- 63: Funkverbindung
- 65: Funksender
- 67: kamerazugewandte Antenne
- 69: Antennenkabel
- 71: kameraabgewandte Antenne
- 73: Bildschirm
- 75: kardanische Verbindung
- 77: Haltearm
- 79: Gurt
- 81: Kameramann
- 83: Signalkabel
- 85: Objektiv
- 87: Signaleingang
- 89: Signalausgang
- A: Inertialsensorsignal
- C: Steuersignal
- B1, B2, B3, B4, B5: Betriebssignal
- I: Bildsignal
- K: Kamerazustandssignal
- P: Positionssensorsignal
- S: Signalstrom
- V: Stromversorgungssignal

## Patentansprüche

1. Kamerastabilisierungsvorrichtung (11),
umfassend einen sich von einem ersten Ende (13) zu einem zweiten Ende (15) erstreckenden Pendelarm (17), welcher an dem ersten Ende (13) eine Kamerahaltevorrichtung (19) zum Halten einer zugeordneten Kamera (21) und an dem zweiten Ende (15) eine Funktionselementhaltevorrichtung (23) zum Halten eines zugeordneten Funktionselements (25) aufweist,
ferner umfassend eine Signalkonzentrationseinrichtung (26), die dazu ausgebildet ist, über eine gemeinsame Übertragungsstrecke (31) wenigstens zwei verschiedenartige Betriebssignale (B1, B2, B3, B4, B5) zwischen dem ersten Ende (13) des Pendelarms (17) und dem zweiten Ende (15) des Pendelarms (17) zu übertragen.

2. Kamerastabilisierungsvorrichtung (11) nach Anspruch 1,
wobei die wenigstens zwei verschiedenartigen Betriebssignale (B1, B2, B3, B4, B5) wenigstens zwei der folgenden Betriebssignale (B1, B2, B3, B4, B5) umfassen:
- ein Stromversorgungssignal zur Versorgung der zugeordneten Kamera (21) und/oder der Kamerahaltevorrichtung (19) und/oder des zugeordneten Funktionselements (25) mit elektrischer Energie;
- ein Bildsignal (I) der zugeordneten Kamera (21) in einem Format zur Darstellung an einem Bildschirm (73);
- ein Bildsignal (I) der zugeordneten Kamera (21) in einem Format zur Weiterübertragung an einen externen Funkempfänger;
- ein Bildsignal in einem Format zur Übermittlung an die zugeordnete Kamera (21);
- ein Audiosignal eines zugeordneten Mikrofons;
- ein Positionssensorsignal (P) eines Positionssensors (35);
- ein Kamerazustandssignal (K), das einen Aufnahmezustand, einen Inaktivitätszustand und/oder einen ausgeschalteten Zustand der zugeordneten Kamera (21) repräsentiert;
- ein Inertialsensorsignal (A) eines Inertialsensors (37);
- ein Objektiveinstellsignal, das einen Einstellwert eines Parameters eines Objektivs (85) der zugeordneten Kamera (21) repräsentiert;
- ein Steuersignal (C) zum Steuern der zugeordneten Kamera (21) einschließlich eines Objektivs (85) der zugeordneten Kamera (21); oder
- ein Steuersignal (C) zum Steuern der Kamerahaltevorrichtung (19).

3. Kamerastabilisierungsvorrichtung (11) nach Anspruch 1 oder 2,
wobei die gemeinsame Übertragungsstrecke (31) durch einen Innenraum (34) des Pendelarms (17) verläuft.

4. Kamerastabilisierungsvorrichtung (11) nach einem der vorhergehenden Ansprüche,
wobei die Signalkonzentrationseinrichtung (26) dazu ausgebildet ist, die wenigstens zwei verschiedenartigen Betriebssignale (B1, B2, B3, B4, B5) optisch, elektrisch oder elektromagnetisch zu übertragen; und/oder wobei die Signalkonzentrationseinrichtung (26) dazu ausgebildet ist, die wenigstens zwei verschiedenartigen Betriebssignale (B1, B2, B3, B4, B5) drahtlos oder drahtgebunden zu übertragen.

5. Kamerastabilisierungsvorrichtung (11) nach einem der vorhergehenden Ansprüche,
wobei die Signalkonzentrationseinrichtung (26) dazu ausgebildet ist, über die gemeinsame Übertragungsstrecke (31) eines der wenigstens zwei verschiedenartigen Betriebssignale (B1, B2, B3, B4, B5) von dem ersten Ende (13) an das zweite Ende (15) des Pendelarms (17) und ein anderes der wenigstens zwei verschiedenartigen Betriebssignale (B1, B2, B3, B4, B5) von dem zweiten Ende (15) an das erste Ende (13) des Pendelarms (17) zu übertragen,
insbesondere wobei die Signalkonzentrationseinrichtung (26) an dem ersten Ende (13) des Pendelarms (17) einen ersten Signalsender (32) und einen ersten Signalempfänger (30) sowie an dem zweiten Ende (15) des Pendelarms (17) einen dem ersten Signalempfänger (30) zugeordneten zweiten Signalsender (33) und einen dem ersten Signalsender (32) zugeordneten zweiten Signalempfänger (29) aufweist.

6. Kamerastabilisierungsvorrichtung (11) nach einem der vorhergehenden Ansprüche,
wobei die Signalkonzentrationseinrichtung (26) dazu ausgebildet ist, die wenigstens zwei verschiedenartigen Betriebssignale (B1, B2, B3, B4, B5) über die gemeinsame Übertragungsstrecke (31) von dem einen an das andere der zwei Enden (13, 15) des Pendelarms (17) zu übertragen.

7. Kamerastabilisierungsvorrichtung (11) nach Anspruch 6,
wobei die Signalkonzentrationseinrichtung (26) an dem einen der zwei Enden (13, 15) des Pendelarms (17) einen Signalkonzentrator (41) und an dem anderen der zwei Enden (13, 15) des Pendelarms (17) einen Signalextrahierer (43) aufweist.

8. Kamerastabilisierungsvorrichtung (11) nach Anspruch 7,
wobei der Signalkonzentrator (41) dazu ausgebildet ist, die wenigstens zwei verschiedenartigen Betriebssignale (B1, B2, B3, B4, B5) an jeweiligen Signaleingängen (45) zu empfangen und zu einem gemeinsamen Signalstrom (S) zusammenzufassen, wobei der Signalextrahierer (43) dazu ausgebildet ist, die wenigstens zwei verschiedenartigen Betriebssignale (B1, B2, B3, B4, B5) aus dem gemeinsamen Signalstrom (S) zu extrahieren,
wobei die gemeinsame Übertragungsstrecke (31) insbesondere ein Kameradatenkabel (47) umfasst, wobei der Signalkonzentrator (41) dazu ausgebildet ist, den gemeinsamen Signalstrom (S) über das gemeinsame Kameradatenkabel (47) an den Signalextrahierer (43) zu übertragen.

9. Kamerastabilisierungsvorrichtung (11) nach einem der vorhergehenden Ansprüche,
wobei an dem zweiten Ende (15) des Pendelarms (17) eine elektrische Energiequelle (49) angeordnet ist, die dazu ausgebildet ist, die zugeordnete Kamera (21) und/oder die Kamerahaltevorrichtung (19) mit elektrischer Energie in Form eines Stromversorgungssignals (V) zu versorgen, wobei die Übertragungsstrecke (31) ein Stromversorgungskabel (51) umfasst, wobei das Stromversorgungssignal (V) eines der wenigstens zwei verschiedenartigen Betriebssignale (B1, B2, B3, B4, B5) bildet, und wobei die Signalkonzentrationseinrichtung (26) dazu ausgebildet ist, ein weiteres der wenigstens zwei verschiedenartigen Betriebssignale (B1, B2, B3, B4, B5) über das Stromversorgungskabel (51) zu übertragen.

10. Kamerastabilisierungsvorrichtung (11) nach Anspruch 9,
wobei an dem ersten Ende (13) des Pendelarms (17) ein erster Spannungswandler (53) und an dem zweiten Ende (15) des Pendelarms (17) ein zweiter Spannungswandler (55) angeordnet ist,
wobei der zweite Spannungswandler (55) dazu ausgebildet ist, einen elektrischen Spannungswert des Stromversorgungssignals (V) zu einer erhöhten Versorgungsspannung zu erhöhen, und
wobei der erste Spannungswandler (53) dazu ausgebildet ist, die erhöhte Versorgungsspannung auf einen an die zugeordnete Kamera (21) und/oder die Kamerahaltevorrichtung (19) angepassten Wert einer elektrischen Nutzversorgungsspannung zu verringern.

11. Kamerastabilisierungsvorrichtung (11) nach einem der vorhergehenden Ansprüche,
wobei entlang der Übertragungsstrecke (31) eine Sichtverbindung (61) besteht, wobei die Signalkonzentrationseinrichtung (26) dazu ausgebildet ist, die wenigstens zwei verschiedenartigen Betriebssignale (B1, B2, B3, B4, B5) über die Sichtverbindung (61) optisch zu übertragen; und/oder wobei die Signalkonzentrationseinrichtung (26) dazu ausgebildet ist, die wenigstens zwei verschiedenartigen Betriebssignale (B1, B2, B3, B4, B5) über eine Funkverbindung (63) entlang der Übertragungsstrecke (31) zu übertragen.

12. Kamerastabilisierungsvorrichtung (11) nach einem der vorhergehenden Ansprüche,
wobei an dem zweiten Ende (15) des Pendelarms (17) ein Funksender (65) angeordnet ist, welcher dazu ausgebildet ist, wenigstens eines der über die Übertragungsstrecke (31) an das zweite Ende (15) des Pendelarms (17) übertragenen Betriebssignale (B1, B2, B3, B4, B5) über eine Funkverbindung (63) an einen externen Funkempfänger zu senden.

13. Kamerastabilisierungsvorrichtung (11) nach Anspruch 12,
wobei dem Funksender (65) eine kamerazugewandte Antenne (67) zum Herstellen der Funkverbindung (63) mit dem externen Funkempfänger zugeordnet ist, wobei die kamerazugewandte Antenne (67) an dem ersten Ende (13) des Pendelarms (17) angeordnet ist, und wobei die kamerazugewandte Antenne (67) über ein innerhalb des Pendelarms (17) verlaufendes Antennenkabel (69) mit dem Funksender (65) verbunden ist.

14. Kamerastabilisierungsvorrichtung (11) nach einem der vorhergehenden Ansprüche,
wobei die Signalkonzentrationseinrichtung (26) mehrere Module aufweist, welche dazu ausgebildet sind, die wenigstens zwei verschiedenartigen Betriebssignale (B1, B2, B3, B4, B5) über verschiedene Schnittstellenkonfigurationen zu übermitteln und/oder zu empfangen.

15. Kamerastabilisierungsvorrichtung (11) nach einem der vorhergehenden Ansprüche,
wobei die Signalkonzentrationseinrichtung (26) einen Bilddatenkomprimierer aufweist, der dazu ausgebildet ist, von der zugeordneten Kamera (21) empfangene Bilddaten zu komprimieren und die komprimierten Bilddaten über die gemeinsame Übertragungsstrecke (31) zu übertragen; und/oder wobei an dem zweiten Ende (15) des Pendelarms (17) ein Bildschirm (73) angeordnet ist, der dazu ausgebildet ist, von der zugeordneten Kamera (21) erzeugte und über die gemeinsame Übertragungsstrecke (31) übertragene Bilddaten wiederzugeben; und/oder
wobei der Pendelarm (17) kardanisch mit einem Haltearm (77) zum Tragen der Kamerastabilisierungsvorrichtung (11) verbunden ist.
